(19) Europäisches Patentamt / European Patent Office / Office européen des brevets

(11) **EP 4 603 541 A1**

(12) **EUROPEAN PATENT APPLICATION**
published in accordance with Art. 153(4) EPC

(43) Date of publication:
**20.08.2025 Bulletin 2025/34**

(21) Application number: **23877068.9**

(22) Date of filing: **13.09.2023**

(51) International Patent Classification (IPC):
*C08L 77/00* (2006.01)   *C08L 25/08* (2006.01)
*C08L 51/04* (2006.01)   *C08L 101/08* (2006.01)

(52) Cooperative Patent Classification (CPC):
**C08L 25/08; C08L 51/04; C08L 77/00; C08L 101/08**

(86) International application number:
**PCT/JP2023/033324**

(87) International publication number:
**WO 2024/080062 (18.04.2024 Gazette 2024/16)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **14.10.2022 JP 2022165619**

(71) Applicant: **Techno-UMG Co., Ltd.
Tokyo 105-0021 (JP)**

(72) Inventors:
• **IWANAGA, Takashi
  Tokyo 105-0021 (JP)**
• **ANDO, Hiroki
  Tokyo 105-0021 (JP)**
• **TANAKA, Naruki
  Tokyo 105-0021 (JP)**

(74) Representative: **Vossius & Partner
Patentanwälte Rechtsanwälte mbB
Siebertstrasse 3
81675 München (DE)**

(54) **THERMOPLASTIC RESIN COMPOSITION AND MOLDED ARTICLE**

(57)    A thermoplastic resin composition comprising: a polyamide (A), at least a part of raw materials of which is derived from biomass; a rubber-reinforced vinyl-based graft resin (B); an aromatic vinyl-based copolymer resin (C); and an acid-modified vinyl-based resin (D), wherein the thermoplastic resin composition contains 20 to 70 parts by mass of the polyamide (A), 5 to 45 parts by mass of the rubber-reinforced vinyl-based graft resin (B), 10 to 75 parts by mass of a total of the aromatic vinyl-based copolymer resin (C) and the acid-modified vinyl-based resin (D), and 0.1 to 40 parts by mass of the acid-modified vinyl-based resin (D) in a total of 100 parts by mass of the polyamide (A), the rubber-reinforced vinyl-based graft resin (B), the aromatic vinyl-based copolymer resin (C), and the acid-modified vinyl-based resin (D).

[Fig.1]

Fig. 1

**Description**

Technical Field

The present invention relates to a thermoplastic resin composition that contains a polyamide made from raw materials derived from biomass (biological organic resources such as plants), has good moldability, excellent impact resistance, chemical resistance, and long-term durability, and suppresses the generation of creaking noise (rubbing noise) when dynamically contacted with parts made of the same or other materials. The present invention also relates to a molded article of the thermoplastic resin composition.

Background Art

Thermoplastic resin compositions are widely used as molding materials for parts of vehicles, OA (office automation) equipment, home appliances, electric and electronic equipment, building materials, and the like.

Among them, polyamide resins have excellent mechanical strength, chemical resistance, abrasion resistance, and the like, and are therefore used in many applications such as industrial products such as automobiles, electric, electronic, and machine parts, and sports and leisure goods. However, polyamide resins have disadvantage of being poor in paintability and impact resistance. Furthermore, polyamide resins have a problem that they are prone to water absorption due to their chemical structure, and have large dimensional changes. Therefore, in order to improve these drawbacks, a lot of research has been done so far.

For example, a rubber-modified nylon composition in which an ABS resin is blended with a polyamide resin using a carboxylic acid group-containing copolymer obtained by copolymerizing an unsaturated carboxylic acid with styrene or acrylonitrile as a compatibilizer has been proposed (see Patent Literature 1).

It is known that the heat resistance, dimensional stability, and rigidity of molded article of polyamide resins can be dramatically improved by adding inorganic fillers such as glass fibers, carbon fibers, and the like. For example, a thermoplastic resin composition has been proposed in which glass fibers, carbon fibers, and the like are blended with a composition containing a polyamide resin and an ABS resin (see Patent Literature 2). This thermoplastic resin composition is excellent in impact resistance, dimensional stability, rigidity, and heat resistance, making it a molding material having a good balance of performance.

Among the thermoplastic resin parts used in these fields (hereinafter referred to as "parts made of thermoplastic resin composition X"), some thermoplastic resin parts are used in combination with other parts, such as thermoplastic resin parts made of the same or different material as the thermoplastic resin composition X, cured resin parts, or inorganic material parts made of metal or inorganic compounds, and the like. For example, the thermoplastic resin parts are arranged in contact with other parts, or these parts are arranged at a predetermined distance (see Patent Literatures 3 and 4). In particular, when thermoplastic resin parts are adjacent to each other (simply in contact with each other, or in contact with each other having a part of an adhesive portion, or arranged at a predetermined distance), it is known that one or both of the parts move or deform due to a vibration, rotation, twisting, sliding, an impact, and the like, and come into dynamic contact, generating creaking noise (rubbing noise). It is said that this creaking noise are caused by the stick-slip phenomenon that occurs when two objects rub against each other.

The stick-slip phenomenon is said to be a phenomenon different from the conventionally known sliding phenomenon between objects.

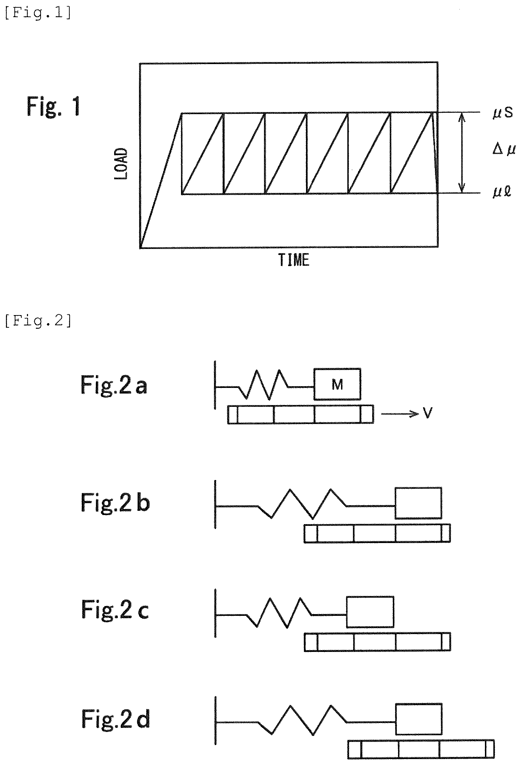

The stick-slip phenomenon is understood as a phenomenon in which frictional force fluctuates periodically and greatly, as shown in Fig. 1. Specifically, the stick-slip phenomenon occurs as shown in Fig. 2. That is, when an object M fixed in place with a spring is placed on a driving stage travelling at a driving speed V as shown by the model illustrated in Fig. 2a, first, the object M moves rightward together with the stage travelling at a driving speed V due to the action of a static frictional force, as illustrated in Fig. 2b. When the force exerted by the spring which acts to restore the spring becomes equal to the static frictional force, the object M starts slipping in a direction opposite to that of the driving speed V. Since the object M is subjected to a kinetic frictional force while slipping, the object M stops slipping, that is, the object M sticks to the driving stage, at the time illustrated in Fig. 2c where the force exerted by the spring becomes equal to the kinetic frictional force. Then, the object M again moves in the same direction as the driving speed V (Fig. 2d).

The above phenomenon is referred to as "stick-slip phenomenon".

It is considered that, the larger the difference $\Delta\mu$ between the static friction coefficient $\mu s$ and the friction coefficient $\mu l$ of the lower end of the sawtooth waveform as illustrated in Fig. 1, the higher the occurrence of the creaking noise.

The kinetic friction coefficient is an intermediate value between $\mu s$ and $\mu l$. Therefore, even in the case where the absolute value of the static friction coefficient is small, when $\Delta\mu$ is large, the occurrence of the creaking noise tends to be increased. The creaking noise act as a major cause of degradation of the comfortability and quietness of the insides of vehicles, office, and home. Therefore, there has been a strong demands for suppression or reduction of the occurrence of the creaking noise.

Various proposals have been made in recent years regarding technologies for suppressing the generation of the creaking noise (rubbing noise).

For example, Patent Literature 3 discloses a thermoplastic resin composition that contains rubber-reinforced aromatic vinyl-based resin (A, B), a crystalline thermoplastic resin (C), and a fibrous or layered filler (D), and has melting points measured in accordance with JIS K7121-1987 in the range of 0 to 100°C and 170 to 280°C, and a flexural modulus of 3,000 MPa or more.

Patent Literature 4 discloses an automobile interior part made of a thermoplastic resin composition comprising 8 to 93% by mass of a styrene-based resin (A) made of the following rubber-reinforced styrene-based resin (A1) and/or the following styrene-based (co)polymer (A2), 5 to 90% by mass of an olefin-based resin (B), and 2 to 50% by mass of the following block copolymer (C), and the total of the above components (A), (B) and (C) being 100% by mass. Here, the rubber-reinforced styrene-based resin (A1) is a rubber-reinforced styrene-based resin obtained by polymerizing a vinyl-based monomer (b) comprising of an aromatic vinyl compound or an aromatic vinyl compound and another vinyl monomer copolymerizable with the aromatic vinyl compound in the presence of a rubbery polymer (a) comprising of a conjugated diene-based rubbery polymer (a-1) and/or an acrylic rubber polymer (a-2). The styrene-based (co)polymer (A2) is a styrene-based (co)polymer of the vinyl-based monomer (b). The block copolymer (C) is at least one type of block copolymer selected from block copolymers containing a polymer block mainly composed of an aromatic vinyl compound and a polymer block mainly composed of a conjugated diene compound and hydrogenated products thereof.

When a thermoplastic resin part is repeatedly comes into contact with another part, the surface of the thermoplastic resin part may wear away, and a gap may form between the part and the other part. In order to suppress this, for example, a thermoplastic resin composition containing a polyamide resin as a main component and further containing an inorganic filler is known (see Patent Literature 5). However, polyamide resins such as polyamide 6 are prone to moisture absorption and dimensional changes, so it has been difficult to maintain the suppression or reduction of creaking noise over the long term.

On the other hand, in recent years, in order to build a recycling-oriented society, the use of biomass instead of fossil fuel raw materials has been attracting attention in the material field. Biomass is an organic compound produced by photosynthesis from carbon dioxide and water. By using biomass, it can be converted back into carbon dioxide and water again, making it a so-called carbon-neutral raw material (the amount of carbon dioxide emitted and absorbed in the environment is the same, so the increase in carbon dioxide which is a greenhouse gas can be suppressed). Recently, the practical use of biomass plastics made from these biomass raw materials has been rapidly progressing. Attempts have also been made to produce polyamide which is a general-purpose polymer material from these biomass raw materials.

Citation List

Patent Literature

[Patent Literature 1] JP H7-84549 B
[Patent Literature 2] JP 2002-212383 A
[Patent Literature 3] WO 2014/175332
[Patent Literature 4] JP 2011-168186 A
[Patent Literature 5] JP 2019-172759 A

Summary of Invention

Technical Problem

An object of the present invention is to provide a thermoplastic resin composition containing a biomass-derived polyamide, which has good moldability, excellent impact resistance, chemical resistance, and long-term durability, and suppresses the generation of creaking noise (rubbing noise) when dynamically contacted with parts made of the same or other materials.

Solution to Problem

The inventors of the present invention have discovered that by blending a biomass-derived polyamide (A) with a rubber-reinforced vinyl-based graft resin (B), an aromatic vinyl-based copolymer resin (C), and an acid-modified vinyl-based resin (D) in specific ratios, it is possible to obtain a product having good moldability, excellent impact resistance, chemical resistance, and long-term durability, while also significantly reducing the generation of the above-mentioned creaking noise.

The present invention is summarized as follows.

[1] A thermoplastic resin composition comprising: a polyamide (A), at least a part of raw materials of which is derived from biomass;

a rubber-reinforced vinyl-based graft resin (B);
an aromatic vinyl-based copolymer resin (C); and
an acid-modified vinyl-based resin (D),
wherein the thermoplastic resin composition contains 20 to 70 parts by mass of the polyamide (A), 5 to 45 parts by mass of the rubber-reinforced vinyl-based graft resin (B), 10 to 75 parts by mass of a total of the aromatic vinyl-based copolymer resin (C) and the acid-modified vinyl-based resin (D), and 0.1 to 40 parts by mass of the acid-modified vinyl-based resin (D) in a total of 100 parts by mass of the polyamide (A), the rubber-reinforced vinyl-based graft resin (B), the aromatic vinyl-based copolymer resin (C), and the acid-modified vinyl-based resin (D).

[2] The thermoplastic resin composition according [1], wherein the rubber-reinforced vinyl-based graft resin (B) comprises a rubbery polymer (b) portion and a resin (m) portion containing structural units derived from a vinyl-based monomer grafted to the rubbery polymer (b), and the weight average particle diameter of the rubbery polymer (b) is 0.20 to 0.70 μm.

[3] The thermoplastic resin composition according to [2], wherein the rubber-reinforced vinyl-based graft resin (B) contains, as the rubbery polymer (b), an ethylene-α-olefin-based rubbery polymer (b1) portion having a melting point of 0 to 100°C measured in accordance with JIS K7121-1987.

[4] The thermoplastic resin composition according to [3], wherein the rubber-reinforced vinyl-based graft resin (B) is obtained by polymerizing a vinyl-based monomer containing an aromatic vinyl compound in the presence of an ethylene-α-olefin rubber polymer (b1) having a melting point of 0 to 100°C measured in accordance with JIS K7121-1987.

[5] A molded article made of the thermoplastic resin composition according to any one of [1] to [4]. Advantageous Effects of Invention

The thermoplastic resin composition according to the present invention enables a molded article containing a biomass-derived polyamide, and having good moldability, excellent impact resistance, chemical resistance, and long-term durability, and suppressing the generation of creaking noise (rubbing noise) when it dynamically contacted with parts made of the same or other materials.

When the thermoplastic resin composition of the present invention further contains a reinforced vinyl-based graft resin using a specific ethylene-α-olefin-based rubbery polymer, it is possible to provide a molded article in which the generation of creaking noise (rubbing noise) is suppressed for a long period of term.

Brief Description of Drawings

[Fig. 1] Fig. 1 is a diagram illustrating the stick-slip phenomenon.
[Fig. 2] Figs. 2a, 2b, 2c, and 2d are diagrams illustrating models of the stick-slip phenomenon.
[Fig. 3] Fig. 3 is a schematic cross-sectional view illustrating an example of the mode in which parts are arranged in contact with each other.
[Fig. 4] Fig. 4 is a schematic cross-sectional view illustrating another example of the contact mode.
[Fig. 5] Fig. 5 is a schematic cross-sectional view illustrating another example of the contact mode.
[Fig. 6] Fig. 6 is a schematic cross-sectional view illustrating another example of the contact mode.
[Fig. 7] Fig. 7 is a schematic cross-sectional view illustrating another example of the contact mode.
[Fig. 8] Fig. 8 is a schematic cross-sectional view illustrating another example of the contact mode.
[Fig. 9] Figs. 9A, 9B, and 9C are schematic diagrams illustrating another contact mode, where Fig. 9A is a plan view, Fig. 9B is a side view, and Fig. 9C is a cross-sectional view taken along the line C-C in Fig. 9A.
[Fig. 10] Fig. 10 is a schematic perspective view illustrating a part 20 illustrated in Fig. 9.
[Fig. 11] Figs. 11A, 11B, and 11C are schematic diagrams illustrating another contact mode, where Fig. 11A is a plan view, Fig. 11B is a side view, and Fig. 11C is a cross-sectional view taken along the line C-C in Fig. 11A.
[Fig. 12] Figs. 12A, 12B, and 12C are schematic diagrams illustrating another contact mode, where Fig. 12A is a plan view, Fig. 12B is a side view, and Fig. 12C is a cross-sectional view taken along the line C-C in Fig. 12A.

[Fig. 13] Fig. 13 is a schematic perspective view of a part used in the other contact mode illustrated in Fig. 14.

[Fig. 14] Figs. 14A, 14B, and 14C are schematic diagrams illustrating another contact mode, where Fig. 14A is a bottom view, Fig. 14B is a cross-sectional view taken along the line B-B in Fig. 14A, and Fig. 14C is a cross-sectional view taken along the line C-C in Fig. 14A. Description of Embodiments

Details of a thermoplastic resin composition and a molded article according to an embodiment of the present invention are described below.

In this specification, the term "(meth)acryl" used herein refers to acryl and/or methacryl. The term "(meth) acrylate" used herein refers to acrylate and/or methacrylate. The term "(meth)acryloyl" used herein refers to acryloyl and/or methacryloyl.

The term "(co) polymer" used herein refers to a homopolymer and/or a copolymer.

[Thermoplastic Resin Composition]

The thermoplastic resin composition according to the present invention is a thermoplastic resin composition that includes a polyamide (A), at least a part of raw materials of which is derived from biomass; a rubber-reinforced vinyl-based graft resin (B); an aromatic vinyl-based copolymer resin (C); and an acid-modified vinyl-based resin (D), wherein the thermoplastic resin composition contains 20 to 70 parts by mass of the polyamide (A), 5 to 45 parts by mass of the rubber-reinforced vinyl-based graft resin (B), 10 to 75 parts by mass of a total of the aromatic vinyl-based copolymer resin (C) and the acid-modified vinyl-based resin (D), and 0.1 to 40 parts by mass of the acid-modified vinyl-based resin (D) in a total of 100 parts by mass of the polyamide (A), the rubber-reinforced vinyl-based graft resin (B), the aromatic vinyl-based copolymer resin (C), and the acid-modified vinyl-based resin (D).

Hereinafter, the biomass-derived polyamide (A) may be simply referred to as the "polyamide (A)" or "component (A)". The rubber-reinforced vinyl-based graft resin (B), aromatic vinyl-based copolymer resin (C), and acid-modified vinyl-based resin (D) may be referred to as the "component (B)", "component (C)", and "component (D)", respectively.

The component (B) in the present invention differs from the component (C) and the component (D) in that the component (B) contains a rubbery polymer portion, while the component (C) and the component (D) do not contain a rubbery polymer portion.

The component (C) differs from the component (D) in that the component (D) contains acid-modified groups consisting of a carboxyl group and/or an acid anhydride group, while the component (C) does not contain these acid-modified groups.

As described below, in the production of rubber-reinforced vinyl-based graft resin (B), a graft copolymer (B-1) and a resin (B-2) are produced. The graft copolymer (B-1) is a resin containing structural units derived from a vinyl-based monomer is chemically bonded to a rubbery polymer (b). The resin (B-2) contains structural units derived from a vinyl-based monomer that exists in a free state without being bonded to the rubbery polymer (b).

In the present invention, the graft copolymer (B-1) produced here is defined as the rubber-reinforced vinyl-based graft resin (B) which is the component (B). The resin (B-2) produced at the same time is not grafted to the rubbery polymer. The resin (B-2) constitutes the component (C) or the component (D).

In the production of the rubber-reinforced vinyl-based graft resin (B), a very small amount of rubbery polymer that is not grafted with a vinyl-based monomer remains. However, since this amount is so small that it is included in the rubber-reinforced vinyl-based graft resin (B).

The component (B) can be distinguished from the component (C) and/or the component (D) by solvent separation using acetone. An acetone-insoluble component is obtained by adding the reaction product in the production of the rubber-reinforced vinyl-based graft resin (B) to acetone and shaking it, followed by solid-liquid separation by centrifugation or the like. The acetone-insoluble component thus obtained corresponds to the component (B). The acetone-soluble component corresponds to the component (C) and/or the component (D).

The acetone-soluble component generated during the production of the component (B) may be used as the component (C) and the component (D) in the production of the thermoplastic resin composition of the present invention. Instead thereof, the components (C) and (D) produced separately from the production of the component (B) may be used, or both of these may be used.

<Polyamide (A)>

The polyamide (A) is a resin having an acid amide bond (-CO-NH-) in the main chain. The polyamide (A) can be produced by a conventional method, that is, by polymerization of lactam having a ring structure, or amino acid, or by condensation polymerization of a dicarboxylic acid and a diamine. Therefore, homopolyamides, copolyamides, and the like can be used as the polyamide (A).

At least a part of raw materials of the polyamides (A) used in the present invention is derived from biomass.

Examples of the polyamides (A) include polyamide 11, polyamide 610, polyamide 1010, polyamide 410, polyamide MXD10 resin, polyamide 11-6T copolymer resin, and the like, which are polyamides using a monomer derived from biomass as at least a part of the raw material. From the viewpoints of easily achieving the carbon neutral effect, and impact resistance and long-term durability of a molded article, polyamide 11 is particularly preferable as the polyamide (A).

Polyamide 11 is a polyamide having a structure in which monomers having 11 carbon atoms are bonded via amide bonds. Polyamide 11 is usually obtained by using aminoundecanoic acid or undecane lactam as a monomer. Aminoundecanoic acid is a monomer obtained from castor oil, and is therefore particularly desirable from the viewpoint of the carbon neutrality. The content of these structural units derived from these monomers having 11 carbon atoms is preferably 50% by mol or more, more preferably 80% by mol or more, and may be 100% by mol based on a total structural units of polyamide 11.

Polyamide 11 is usually produced by the ring-opening polymerization of undecane lactam described above. Polyamide 11 obtained by ring-opening polymerization is usually dried after removing the lactam monomer with hot water, and then melt-extruded in an extruder.

Polyamide 610 is a polyamide resin having a structure in which a diamine having 6 carbon atoms and a dicarboxylic acid having 10 carbon atoms are polymerized. Usually, hexamethylenediamine and sebacic acid are used. Among these, sebacic acid is a monomer obtained from castor oil, and is therefore desirable from the viewpoint of the carbon neutrality. The total content of the structural units derived from a monomer having 6 carbon atoms and the structural units derived from a monomer having 10 carbon atoms is preferably 50% by mol or more, more preferably 80% by mol or more, and may be 100% by mol based on a total structural units of polyamide 610.

Polyamide 1010 is a polyamide resin having a structure in which a diamine having 10 carbon atoms and a dicarboxylic acid having 10 carbon atoms are polymerized. Usually, 1,10-decanediamine (decamethylenediamine) and sebacic acid are used. Decamethylenediamine and sebacic acid are monomers obtained from castor oil, and are therefore desirable from the viewpoint of the carbon neutrality. The total content of the structural units derived from these monomers having 10 carbon atoms and the structural units derived from these monomers having 10 carbon atoms is preferably 50% by mol or more, more preferably 80% by mol or more, and may be 100% by mol based on a total structural units of polyamide 1010.

Polyamide 410 is a polyamide resin having a structure in which a diamine having 4 carbon atoms and a dicarboxylic acid having 10 carbon atoms are polymerized. Usually, tetramethylenediamine and sebacic acid are used. Sebacic acid is a monomer obtained from castor oil, and is therefore desirable from the viewpoint of the carbon neutrality. The total content of the structural units derived from these monomers having 4 carbon atoms and the structural units derived from these monomers having 10 carbon atoms is preferably 50% by mol or more, more preferably 80% by mol or more, and may be 100% by mol based on a total structural units of polyamide 410.

The ends of the polyamide (A) may be blocked with a carboxylic acid, an amine, or the like. Examples of the carboxylic acid include aliphatic monocarboxylic acids such as caproic acid, caprylic acid, capric acid, lauric acid, myristic acid, palmitic acid, stearic acid, and behenic acid, and the like. Examples of the amine include aliphatic primary amines such as hexylamine, octylamine, decylamine, laurylamine, myristylamine, palmitylamine, stearylamine, behenylamine, and the like.

The biobased product content of the polyamide (A) as measured by ASTM 6866 (measurement of the radioactive carbon 14C content) is preferably 50% or more, and particularly preferably 80 to 100%.

The melting point of the polyamide (A) in accordance with JIS K7121-1987 is preferably 160°C or more, and more preferably 170°C or more, from the viewpoint of ease of mixing with the rubber-reinforced vinyl-based graft resin (B), the aromatic vinyl-based copolymer resin (C), and the acid-modified vinyl-based resin (D). There is no particular upper limit to the melting point of the polyamide (A), however it is usually 280°C.

The thermoplastic resin composition of the present invention may contain only one type of the polyamide (A), or may contain two or more types.

<Rubber-reinforced vinyl-based graft resin (B)>

The rubber-reinforced vinyl-based graft resin (B) comprises a rubbery polymer (b) portion and a resin (m) portion containing structural units derived from a vinyl-based monomer grafted to the rubbery polymer (b), and the rubbery polymer (b) portion and the resin (m) portion are chemically bonded.

Examples of the rubbery polymer (b) of the rubber-reinforced vinyl-based graft resin (B) includes an ethylene-$\alpha$-olefin-based rubbery polymer (b1), a diene-based rubbery polymer (b2), an acrylic-based rubbery polymer (b3), a silicone-based rubbery polymer (b4), and the like. From the viewpoints of reduction of creaking noise, mechanical properties such as impact resistance, and secondary processability such as plating property and paintability, it is preferable to include an ethylene-$\alpha$-olefin-based rubbery polymer (b1) and/or a diene-based rubbery polymer (b2), and more preferably an ethylene-$\alpha$-olefin-based rubbery polymer (b1).

Therefore, the rubber-reinforced vinyl-based graft resin (B) is preferably a graft resin obtained by polymerizing a vinyl-based monomer in the presence of an ethylene-α-olefin-based rubbery polymer (b1) and/or a diene-based rubbery polymer (b2), particularly an ethylene-α-olefin-based rubbery polymer (b1).

(Weight average particle diameter of rubbery polymer (b))

The weight average particle diameter of the rubbery polymer (b) constituting the rubber-reinforced vinyl-based graft resin (B) is preferably 0.20 to 0.70 μm, more preferably 0.23 to 0.60 μm, and even more preferably 0.25 to 0.50 μm.
When the weight average particle diameter of the rubbery polymer (b) is equal to or more than the above lower limit, a thermoplastic resin composition having excellent impact resistance and suppression effect of the generation of creaking noise (rubbing noise) can be obtained. When the weight average particle diameter of the rubbery polymer (b) is equal to or less than the above upper limit, a thermoplastic resin composition having excellent chemical resistance can be obtained.
In the present invention, the average particle diameter of the rubbery polymer (b) is a value measured by the following measurement method 1 or measurement method 2.

<Average particle diameter measurement method 1>

The weight average particle diameter and number average particle diameter are determined using a Microtrac ("Nanotrac UPA-EX150" manufactured by Nikkiso Co., Ltd., dynamic light scattering method) as the measuring device and pure water as the measuring solvent.
This measurement method is mainly used to measure the average particle diameter of the rubbery polymer (b) in the rubber-reinforced vinyl-based graft resin (B) produced by an emulsion polymerization.
It has been confirmed by image analysis using an electron microscope that the average particle diameter of the rubbery polymer (b) dispersed in the latex is equivalent to the average particle diameter of the rubbery polymer (b) in the thermoplastic resin composition.

<Average particle diameter measurement method 2>

When the rubber-reinforced vinyl-based graft resin (B) is produced by a solution polymerization in which the rubbery polymer (b) is dissolved in a solvent, the particle diameter of the rubbery polymer (b) in the thermoplastic resin composition is measured by image analysis of a transmission electron microscope photograph of the thermoplastic resin composition to determine the weight average particle diameter (volume average particle diameter) and number average particle diameter.
This method is mainly used to measure the average particle diameter of the rubbery polymer (b) in the rubber-reinforced vinyl-based graft resin (B) by solution polymerization.

(Ethylene-α-olefin-based rubbery polymer (b1))

The ethylene-α-olefin-based rubbery polymer (b1) is a copolymer containing a structural unit derived from ethylene and a structural unit derived from α-olefin.
Examples of the α-olefin include propylene, 1-butene, 1-pentene, 1-hexene, 4-methyl-1-pentene, 1-heptene, 1-octene, 1-decene, 1-dodecene, 1-hexadecene, 1-eicosene, and the like. These α-olefins can be used alone or in combination of two or more. The number of carbon atoms of the α-olefin is preferably 3 to 20, more preferably 3 to 12, and even more preferably 3 to 8, from the viewpoints of the appearance and impact resistance of the molded article obtained using the thermoplastic resin composition of the present invention.
The content ratios of the structural units derived from ethylene and the structural units derived from the α-olefin constituting the ethylene-α-olefin-based rubbery polymer (b1), when the total of the two is taken as 100% by mass, are preferably 5 to 95% by mass of structural units derived from ethylene and 5 to 95% by mass of structural units derived from the α-olefins, more preferably 50 to 95% by mass of structural units derived from ethylene and 5 to 50% by mass of structural units derived from the α-olefins, and even more preferably 60 to 95% by mass of structural units derived from ethylene and 5 to 40% by mass of structural units derived from the α-olefins, in order to obtain a molded article that has good moldability, excellent impact resistance, chemical resistance, and long-term durability, and that suppresses the generation of creaking noise (rubbing noise) when dynamically contacted with parts made of the same or other materials.
In the present invention, the preferred ethylene-a-olefin-based rubbery polymer (b1) is an ethylene-α-olefin copolymer having a melting point in the range of 0 to 100°C as measured in accordance with JIS K7121-1987, and to that extent, it may contain structural units derived from other monomers. Examples of other monomers include non-conjugated diene compounds such as alkenylnorbornenes, cyclic dienes, aliphatic dienes, and the like. The structural units derived from other monomers may be used alone or in combination of two or more. The upper limit of the content of structural units derived from non-conjugated diene compounds is preferably 10% by mass, more preferably 5% by mass, and even more preferably 3% by mass, when the total amount of structural units constituting the ethylene-$\alpha$-olefin-based rubbery polymer (b1) is taken as 100% by mass.

The melting point of the ethylene-$\alpha$-olefin-based rubbery polymer (b1) is more preferably 10 to 90°C, and even more preferably 20 to 80°C, since it provides a molded article that has good moldability, impact resistance, chemical resistance, and suppresses the generation of creaking noise (rubbing noise) when dynamically contacted with parts made of the same or other materials.

The fact that the melting point of the ethylene-$\alpha$-olefin-based rubbery polymer (b1) is in the range of 0 to 100°C means that this rubbery polymer has crystallinity. It is believed that when the ethylene-$\alpha$-olefin-based rubbery polymer (b1) has a crystalline portion, the occurrence of the stick-slip phenomenon is suppressed, and the occurrence of creaking noise due to contact with parts made of the same or other materials is reduced.

The ethylene-$\alpha$-olefin-based rubbery polymer (b1) is preferably an ethylene-$\alpha$-olefin copolymer consisting of structural units derived from ethylene and structural units derived from $\alpha$-olefins, since this provides a sufficient effect of the present invention. As the ethylene-$\alpha$-olefin-based rubbery polymer (b1), in particular, ethylenepropylene copolymer, ethylene-1-butene copolymer, and ethylene-1-octene copolymer are preferred, and ethylenepropylene copolymer is particularly preferred.

These ethylene-$\alpha$-olefin-based rubbery polymers (b1) can be used alone or in combination of two or more.

(Diene-based rubbery polymer (b2))

Examples of the diene-based rubbery polymer (b2) include homopolymers such as polybutadiene, polyisoprene, and the like; butadiene-based copolymers such as styrene-butadiene copolymer, styrene-butadiene-styrene copolymer, acrylonitrile-styrene-butadiene copolymer, acrylonitrile-butadiene copolymer, and the like; isoprene-based copolymers such as styrene-isoprene copolymer, styrene-isoprene-styrene copolymer, acrylonitrile-styrene-isoprene copolymer, and the like. These may be random copolymers or block copolymers.

The diene-based rubbery polymer (b2) may be a crosslinked polymer or an uncrosslinked polymer.

These diene-based rubbery polymer (b2) can be used alone or in combination of two or more.

(Acrylic-based rubbery polymer (b3))

The acrylic-based rubbery polymer (b3) is not particularly limited, but is preferably a (co)polymer of a (meth) acrylic acid alkyl ester compound having an alkyl group having 1 to 8 carbon atoms, or a copolymer of this (meth)acrylic acid alkyl ester compound and a vinyl-based monomer copolymerizable therewith.

Specific examples of acrylic acid alkyl ester compounds having an alkyl group having 1 to 8 carbon atoms used here include methyl acrylate, ethyl acrylate, propyl acrylate, n-butyl acrylate, i-butyl acrylate, amyl acrylate, hexyl acrylate, n-octyl acrylate, 2-ethylhexyl acrylate, cyclohexyl acrylate, and the like.

Specific examples of methacrylic acid alkyl ester compounds include methyl methacrylate, ethyl methacrylate, propyl methacrylate, n-butyl methacrylate, i-butyl methacrylate, amyl methacrylate, hexyl methacrylate, n-octyl methacrylate, 2-ethylhexyl methacrylate, cyclohexyl methacrylate, and the like.

Among these compounds, n-butyl acrylate and 2-ethylhexyl acrylate are preferred, and n-butyl acrylate is particularly preferred.

These compounds can be used alone or in combination of two or more.

These acrylic-based rubbery polymers (b3) can be used alone or in combination of two or more.

(Silicone-based rubbery polymer (b4))

The silicone-based rubbery polymer (b4) is not particularly limited, however polyorganosiloxanes having vinyl polymerizable functional groups are preferred, and silicone-acrylic-based composite rubbers are preferred from the viewpoint of color development.

As the silicone-acrylic-based composite rubber, a silicone-acrylic-based composite rubber in which a polyorganosiloxane and an alkyl (meth)acrylate-based polymer are composited is preferred. Silicone-acrylic-based composite rubbers can be produced, for example, according to the method described in JP 2016-125006 A.

These silicone-based rubbery polymers (b4) can be used alone or in combination of two or more.

The vinyl-based monomer forming the resin (m) portion of the rubber-reinforced vinyl-based graft resin (B) is not particularly limited, however examples may include, primarily, an aromatic vinyl compound, a vinyl cyanide compound, a (meth)acrylic acid ester compound, a maleimide-based compound, a vinyl-based monomer that provides a structural unit having a carboxy group, and a vinyl-based monomer that provides an acid anhydride group, as described below, a vinyl-based monomer that has other functional groups, and the like. Among these, it is preferable to include an aromatic vinyl compound and a vinyl cyanide compound.

The aromatic vinyl compound is not particularly limited as long as it is a compound that has at least one vinyl bond and at least one aromatic ring. Examples of aromatic vinyl compound include styrene, α-methylstyrene, o-methylstyrene, p-methylstyrene, β-methylstyrene, ethylstyrene, p-tert-butylstyrene, vinyltoluene, vinylxylene, vinylnaphthalene, and the like. Among these, styrene and α-methylstyrene are preferred, and styrene is particularly preferred. These may be used alone or in combination of two or more.

Examples of the vinyl cyanide compound include acrylonitrile, methacrylonitrile, ethacrylonitrile, α-ethylacrylonitrile, α-isopropylacrylonitrile, and the like. Among these, acrylonitrile is preferred. These may be used alone or in combination of two or more.

Examples of the (meth)acrylic acid ester compound include methyl (meth)acrylate, ethyl (meth)acrylate, n-propyl (meth)acrylate, isopropyl (meth)acrylate, n-butyl (meth)acrylate, isobutyl (meth)acrylate, sec-butyl (meth)acrylate, tert-butyl (meth)acrylate, hexyl (meth)acrylate, n-octyl (meth)acrylate, 2-ethylhexyl (meth)acrylate, cyclohexyl (meth)acrylate, phenyl (meth)acrylate, benzyl (meth)acrylate, and the like. These may be used alone or in combination of two or more.

Examples of the maleimide-based compound include maleimide, N-methylmaleimide, N-isopropylmaleimide, N-butylmaleimide, N-dodecylmaleimide, N-phenylmaleimide, N-(2-methylphenyl)maleimide, N-(4-methylphenyl)maleimide, N-(2,6-dimethylphenyl)maleimide, N-(2,6-diethylphenyl)maleimide, N-benzylmaleimide, N-naphthylmaleimide, N-cyclohexylmaleimide, and the like. These may be used alone or in combination of two or more.

In order to introduce a structural unit derived from a maleimide-based compound into the polymer chain, for example, a method of copolymerizing an unsaturated dicarboxylic acid anhydride with maleic anhydride and then imidizing the copolymer may also be applied.

Examples of the vinyl-based monomer (carboxy group containing unsaturated compound) that provides a structural unit having a carboxy group include (meth)acrylic acid, ethacrylic acid, maleic acid, fumaric acid, itaconic acid, crotonic acid, cinnamic acid, and the like. Among these, methacrylic acid is preferred. These may be used alone or in combination of two or more.

Examples of the vinyl-based monomer

(unsaturated acid anhydride) that provide a structural unit having an acid anhydride group include maleic anhydride, itaconic anhydride, citraconic anhydride, and the like. These may be used alone or in combination of two or more.

In addition to the above vinyl-based monomers, vinyl-based monomers having at least one functional group selected from a hydroxy group, an amino group, an epoxy group, and an oxazoline group may also be used.

Examples of the vinyl-based monomer having a hydroxy group (hydroxy group containing unsaturated compound) include (meth)acrylic acid esters having a hydroxy group, such as hydroxymethyl (meth)acrylate, 2-hydroxyethyl (meth)acrylate, 2-hydroxypropyl (meth)acrylate, 3-hydroxypropyl (meth)acrylate, 2-hydroxybutyl (meth)acrylate, 3-hydroxybutyl (meth)acrylate, 4-hydroxybutyl (meth)acrylate, polyethylene glycol mono(meth)acrylate, polypropylene glycol mono(meth)acrylate, and the like; o-hydroxystyrene, m-hydroxystyrene, p-hydroxystyrene, o-hydroxy-α-methylstyrene, m-hydroxy-α-methylstyrene, p-hydroxy-α-methylstyrene, 2-hydroxymethyl-α-methylstyrene, 3-hydroxymethyl-α-methylstyrene, 4-hydroxymethyl-α-methylstyrene, 4-hydroxymethyl-1-vinylnaphthalene, 7-hydroxymethyl-1-vinylnaphthalene, 8-hydroxymethyl-1-vinylnaphthalene, 4-hydroxymethyl-1-isopropenylnaphthalene, 7-hydroxymethyl-1-isopropenylnaphthalene, 8-hydroxymethyl-1-isopropenylnaphthalene, p-vinylbenzyl alcohol, 3-hydroxy-1-propene, 4-hydroxy-1-butene, cis-4-hydroxy-2-butene, trans-4-hydroxy-2-butene, 3-hydroxy-2-methyl-1-propene, and the like. These may be used alone or in combination of two or more.

Examples of the vinyl-based monomer having an amino group (amino group containing unsaturated compound) include aminoethyl acrylate, propylaminoethyl acrylate, dimethylaminomethyl acrylate, diethylaminomethyl acrylate, 2-dimethylaminoethyl acrylate, aminoethyl methacrylate, propylaminoethyl methacrylate, dimethylaminomethyl methacrylate, diethylaminomethyl methacrylate, 2-dimethylaminoethyl methacrylate, phenylaminoethyl methacrylate, p-aminostyrene, N-vinyldiethylamine, N-acetylvinylamine, acrylamine, methacrylamine, N-methylacrylamine, and the like. These may be used alone or in combination of two or more.

Examples of the vinyl-based monomer (epoxy group containing unsaturated compound) that provide a structural unit having an epoxy group include glycidyl (meth)acrylate, 3,4-oxycyclohexyl (meth)acrylate, vinyl glycidyl ether, allyl glycidyl ether, methallyl glycidyl ether, and the like. These may be used alone or in combination of two or more.

Examples of the vinyl-based monomer having an oxazoline group (oxazoline group containing unsaturated compound) include vinyl oxazoline, 4-methyl-2-vinyl-2-oxazoline, 5-methyl-2-vinyl-2-oxazoline, 2-vinyl-4,4-dimethyl-2-oxazoline, 2-isopropenyl-2-oxazoline, 4-methyl-2-isopropenyl-2-oxazoline, 5-methyl-2-isopropenyl-2-oxazoline, 2-isopropenyl-4,4-dimethyl-2-oxazoline, and the like. These may be used alone or in combination of two or more.

As the resin (m) portion, a resin (m1) portion containing a structural unit derived from an aromatic vinyl compound and a structural unit derived from a vinyl cyanide compound, and a resin (m2) portion containing a structural unit derived from a vinyl-based monomer that gives a structural unit derived from an aromatic vinyl compound, a structural unit derived from a vinyl cyanide compound, and a structural unit having a carboxy group, i.e., a structural unit derived from a carboxy group containing unsaturated compound and/or an unsaturated acid anhydride, are preferred, and a resin (m1) portion containing a structural unit derived from an aromatic vinyl compound and a structural unit derived from a vinyl cyanide compound is more preferred.

When the resin (m) portion is a resin (m1) portion containing a structural unit derived from an aromatic vinyl compound and a structural unit derived from a vinyl cyanide compound, the lower limit of the content ratio of the total amount of the structural units derived from an aromatic vinyl compound and the structural units derived from a vinyl cyanide compound based on 100% by mass of the total of the structural units derived from the vinyl-based monomers that form the resin (m) portion is preferably 50% by mass, more preferably 70% by mass, and even more preferably 90% by mass, from the viewpoints of the appearance and impact resistance of the molded article obtained using the thermoplastic resin composition of the present invention.

The content ratio of the structural units derived from an aromatic vinyl compound and the structural units derived from a vinyl cyanide compound contained in the resin (m1) portion is preferably 50 to 95 % by mass of structural units derived from the aromatic vinyl compound and 5 to 50% by mass of structural units derived from the vinyl cyanide compound, more preferably 60 to 85% by mass of structural units derived from the aromatic vinyl compound and 15 to 40% by mass of structural units derived from the vinyl cyanide compound, and even more preferably 65 to 80% by mass of structural units derived from the aromatic vinyl compound and 20 to 35% by mass of structural units derived from the vinyl cyanide compound, from the viewpoints of the appearance, impact resistance, and color tone of the molded article obtained using the thermoplastic resin composition of the present invention.

When the resin (m) portion is a resin (m2) portion further containing structural units derived from a carboxyl group containing unsaturated compound and/or an unsaturated acid anhydride, the content of the structural units derived from the carboxyl group containing unsaturated compound and/or the unsaturated acid anhydride is preferably 0.1 to 20% by mass, more preferably 1 to 20% by mass, and even more preferably 2 to 8% by mass, based on 100% by mass of the total of the structural units derived from the vinyl-base monomers that form the resin (m2) portion. When it is within the above range, a molded article having good moldability, excellent impact resistance, chemical resistance, long-term durability, and molded appearance can be obtained.

The content ratio of the structural units derived from the aromatic vinyl compound and the structural units derived from the vinyl cyanide compound in the resin (m2) portion is preferably the same as that in the resin (m1) portion.

The content ratio of the rubbery polymer (b) portion and the resin (m) portion contained in the rubber-reinforced vinyl-based graft resin (B) is preferably 20 to 90% by mass of the rubbery polymer (b) portion and 10 to 80% by mass of the resin (m) portion, more preferably 25 to 84% by mass of the rubbery polymer (b) portion and 16 to 75% by mass of the resin (m) portion, and even more preferably 30 to 77% by mass of the rubbery polymer (b) portion and 23 to 70% by mass of the resin (m) portion, based on 100% by mass of the total of both, because it provides a molded article that has good moldability, excellent impact resistance, chemical resistance, and long-term durability, and suppresses the generation of creaking noise (rubbing noise) when dynamically contacted with parts made of the same or other materials.

The graft ratio of the rubber-reinforced vinyl-based graft resin (B) of the component (B) is usually 10 to 150%, preferably 15 to 120%, more preferably 20 to 100%, and particularly preferably 30 to 80%. When the graft ratio of the component (B) is within the above range, the impact resistance and moldability of the resulting thermoplastic resin composition are further improved.

The graft ratio of the component (B) can be calculated using the following formula (1).

$$\text{Graft ratio (\% by mass)} = ((S-T)/T) \times 100 \;\ldots \; (1)$$

In the above formula (1), S is the mass (g) of an insoluble component obtained by charging 1 g of the component (B), or 1g of a mixture of the component (B) and the component (C) and/or the component (D) obtained by the above mentioned graft polymerization producing method, into 20 mL of acetone, shaking the resulting mixture for 2 hours with a shaker under a condition of a temperature of 25°C, and then centrifuging the mixture for 60 minutes with a centrifugal separation apparatus (rotation speed: 23,000 rpm) under a condition of a temperature of 5°C in order to separate an insoluble component and a soluble component from each other.

T represents the mass (g) of a rubbery polymer (b) included in 1 g of the component (B).

The mass of the rubbery polymer (b) can be determined, for example, by a method of calculation from the polymerization formulation and the polymerization conversion ratio, or by infrared absorption spectrum (IR), pyrolysis gas chromatography, CHN elemental analysis, or the like.

The graft ratio of the component (B) can be adjusted by for example appropriately selecting, a type and amount of a chain transfer agent, and a type and amount of a polymerization initiator used in the graft polymerization when producing the component (B), a method with which monomer components are added in the polymerization, an amount of time during which the monomer components are added in the polymerization, the polymerization temperature, and the like.

The thermoplastic resin composition of the present invention may contain only one type of rubber-reinforced vinyl-based graft resin (B), or may contain two or more types that differ in the type and/or composition of structural units, physical properties, and the like.

As described above, the rubbery polymer (b) of the rubber-reinforced vinyl-based graft resin (B) may be an ethylene-$\alpha$-olefin-basedrubbery polymer (b1), a diene-based rubbery polymer (b2), an acrylic-based rubbery polymer (b3), a silicone-based rubbery polymer (b4), or the like. So, the rubber-reinforced vinyl-based graft resin (B) may be a graft resin containing an ethylene-$\alpha$-olefin-based rubbery polymer (b1) as the rubbery polymer (b), a graft resin containing a diene-based rubbery polymer (b2) as the rubbery polymer (b), a graft resin containing an acrylic-based rubbery polymer (b3) as the rubbery polymer (b), a graft resin containing a silicone-based rubbery polymer (b4) as the rubbery polymer (b), or the like, and two or more of these may be used in combination.

From the viewpoint of reducing creaking noise, it is preferable to use a rubber-reinforced vinyl-based graft resin (B) containing an ethylene-$\alpha$-olefin-basedrubbery polymer (b1) as the rubbery polymer (b) alone. In order to impart impact resistance, plating property, paintability, and the like, it is preferable to use a rubber-reinforced vinyl-based graft resin (B) containing an ethylene-$\alpha$-olefin-based rubbery polymer (b1) as the rubbery polymer (b) in combination with a rubber-reinforced vinyl-based graft resin (B) containing a diene-based rubbery polymer (b2) as the rubbery polymer (b).

The rubber-reinforced vinyl-based graft resin (B) can be produced, for example, by graft polymerizing a vinyl-based monomer consisting of an aromatic vinyl compound and, if desired, another vinyl-based compound copolymerizable with the aromatic vinyl compound, in the presence of a rubbery polymer (b) such as an ethylene-$\alpha$-olefin-based rubbery polymer (b1) having a melting point (Tm) of 0 to 100°C. The polymerization method in this production method is not particularly limited as long as the graft copolymer component (B) is obtained, and known methods can be applied. As the polymerization method, an emulsion polymerization, a suspension polymerization, a solution polymerization, a bulk polymerization, or a combination of these polymerization methods can be used. In these polymerization methods, known polymerization initiators, chain transfer agents (molecular weight regulators), emulsifiers, and the like can be used as appropriate.

In the above production method, a mixed product is usually obtained from the above component (B), which is a graft copolymer (B-1) in which a (co)polymer of vinyl-based monomers is graft-polymerized onto a rubbery polymer (b), and the above component (C) and/or the above component (D), which is a (co)polymer resin (B-2) of vinyl-based monomers that are not graft-polymerized onto the rubbery polymer (b). In some cases, the mixed product may also contain a rubbery polymer (b) to which the (co)polymer is not graft-polymerized. The thermoplastic resin composition of the present invention contains the component (B), the component (C), and the component (D) as essential components. In other words, it contains the above mentioned component (B) and both above mentioned component (C) and component (D) as essential components. Therefore, the mixed product of the above mentioned component (B) and component (C) and/or component (D) produced as described above can be used as it is as the raw material of the thermoplastic resin composition of the present invention as the component (B), the component (C) and/or the component (D).

The graft copolymer (B-1) which is the above mentioned component (B) can be separated from the mixed product of the above mentioned component (B) and the resin (B-2) which is the component (C) and/or the component (D) by solvent separation using acetone. Specifically, the mixed product of the above mentioned component (B) and the above mentioned component (C) and/or component (D) is put into acetone, shaken, and then centrifuged, whereby the above mentioned component (B) is obtained as an acetone-insoluble component, and the above mentioned component (C) and/or component (D) is obtained as an acetone-soluble component.

Therefore, as the raw material for the component (B) in the thermoplastic resin composition of the present invention, the acetone-insoluble component separated by the above mentioned acetone separation from the mixed product of the above mentioned component (B) and the component (C) and/or the component (D) can be also used. Similarly, as the raw material for the component (C) and/or the component (D) in the thermoplastic resin composition of the present invention, the above mentioned acetone-soluble component separated by the above mentioned acetone separation from the mixed product of the above mentioned component (B) and the component (C) and/or the component (D) can be also used. The above mentioned component (B), component (C) and component (D) may be a mixture produced by mixing the separated component (B) and component (C) and/or component (D).

<Aromatic vinyl-based copolymer resin (C)>

The aromatic vinyl-based copolymer resin (C) is a copolymer having structural units derived from vinyl-based monomers including at least an aromatic vinyl compound. The aromatic vinyl-based copolymer resin (C) preferably has a structural unit composition similar to that of the resin (m1) portion described above, including structural units derived from an aromatic vinyl compound and structural units derived from a vinyl cyanide compound.

The aromatic vinyl-based copolymer resin (C) may be one produced as the resin (B-2) during the production of the component (B), or may be one obtained by copolymerizing a vinyl-based monomer containing an aromatic vinyl compound without using a rubbery polymer separately from this resin (B-2), or may contain both.

When the component (C) produced as the resin (B-2) during the production of the component (B) and the component (C) produced separately without using a rubbery polymer are used, these may be different in vinyl monomer composition, physical properties, and the like, or may be the same.

The intrinsic viscosity (in methyl ethyl ketone, at 30°C) of the component (C) in the thermoplastic resin composition of the present invention is usually 0.1 to 1.5 dL/g, preferably 0.15 to 1.2 dL/g, and more preferably 0.15 to 1.0 dL/g. When the intrinsic viscosity is within the above range, the impact resistance and moldability of the thermoplastic resin composition of the present invention are further improved.

The intrinsic viscosity $[\eta]$ of the component (C) and the component (D) described below was measured by the following method.

First, the component (C) or the component (D), or the acetone-soluble component of mixed product of the component (B) and the component (C) and/or the component (D), is dissolved in methyl ethyl ketone to prepare five solutions having different concentrations. The reduced viscosity of each concentration is measured at 30°C using an Ubbelohde viscometer tube, and the intrinsic viscosity $[\eta]$ (dL/g) is calculated from the results.

The thermoplastic resin composition of the present invention may contain only one type of the component (C), or may contain two or more types of components with different types and/or compositions of structural units, physical properties, and the like.

<Acid-modified vinyl-based resin (D)>

The acid-modified vinyl-based resin (D) is a copolymer having structural units derived from vinyl-based monomers having at least an acid-modified group, i.e., a carboxyl group and/or an acid anhydride group. The acid-modified vinyl-based resin (D) preferably has a structural unit composition similar to that of the resin (m2) described above, including structural units derived from an aromatic vinyl compound, structural units derived from a vinyl cyanide compound, and structural units derived from a carboxyl group containing unsaturated compound and/or an unsaturated acid anhydride.

The acid-modified vinyl-based resin (D) may be one produced as the resin (B-2) during the production of the component (B), or may be one obtained by copolymerizing vinyl-based monomers including an aromatic vinyl compound and a vinyl cyanide compound, and a carboxyl group containing unsaturated compound and/or an unsaturated acid anhydride, without using a rubbery polymer, separately from this resin (B-2), or may include both.

When the component (D) produced as the resin (B-2) during the production of the component (B) and the component (D) produced separately without using a rubbery polymer are used, these may be different in vinyl monomer compositions, physical properties, and the like, or may be the same.

The intrinsic viscosity (in methyl ethyl ketone, at 30°C) of the component (D) in the thermoplastic resin composition of the present invention is usually 0.1 to 1.5 dL/g, preferably 0.15 to 1.2 dL/g, and more preferably 0.15 to 1.0 dL/g. When the intrinsic viscosity is within the above range, the impact resistance and moldability of the thermoplastic resin composition of the present invention are further improved.

The thermoplastic resin composition of the present invention may contain only one type of the component (D), or may contain two or more types of components with different types and/or compositions of structural units, physical properties, and the like.

<Content of each component>

The content of the component (A) contained in the thermoplastic resin composition of the present invention is 20 to 70 parts by mass, preferably 25 to 65 parts by mass, and more preferably 30 to 60 parts by mass, based on 100 parts by mass of the total of the component (A), the component (B), the component (C), and the component (D).

When the content of the component (A) is equal to or more than the above lower limit, the impact resistance, chemical resistance, and creaking noise reduction effect due to the inclusion of the component (A) are excellent. In addition, the carbon neutral effect can be increased by including the biomass-derived polyamide (A). When the content of the component (A) is equal to or less than the above upper limit, the content of other components (B) to (D) can be secured to provide excellent long-term durability.

The content of the component (B) contained in the thermoplastic resin composition of the present invention is 5 to 45 parts by mass, preferably 7 to 40 parts by mass, and more preferably 10 to 35 parts by mass, based on 100 parts by mass of the total of the component (A), the component (B), the component (C), and the component (D).

When the content of the component (B) is equal to or more than the above lower limit, the impact resistance and creaking noises reduction effect due to the inclusion of the component (B) are excellent. When the content of the component (B) is equal to or less than the above upper limit, the contents of the other components (A), (C), and (D) can be secured to provide excellent chemical resistance.

When two or more types of the components (B) are used in combination, for example, when a rubber-reinforced vinyl-based graft resin (B) containing an ethylene-α-olefin-based rubbery polymer (b1) as the rubbery polymer (b) and a rubber-reinforced vinyl-based graft resin (B) containing a diene-based rubbery polymer (b2) as the rubbery polymer (b) are used in combination, the respective contents based on 100 parts by mass of the total of the component (A), the component (B), the component (C), and the component (D) in the thermoplastic resin composition of the present invention are preferably as follows, from the viewpoint of creaking noise reduction effect. That is, the rubber-reinforced vinyl-based graft resin (B) containing the ethylene-α-olefin-based rubbery polymer (b1) is preferably 5 to 30 parts by mass, and the rubber-reinforced vinyl-based graft resin (B) containing the diene-based rubbery polymer (b2) is preferably 1 to 30 parts by mass, the rubber-reinforced vinyl-based graft resin (B) containing the ethylene-α-olefin-based rubbery polymer (b1) is preferably 10 to 30 parts by mass, and the rubber-reinforced vinyl-based graft resin (B) containing the diene-based rubbery polymer (b2) is more preferably 1 to 20 parts by mass, and the rubber-reinforced vinyl-based graft resin (B) containing the ethylene-α-olefin-based rubbery polymer (b1) is even more preferably 10 to 30 parts by mass, and the rubber-reinforced vinyl-based graft resin (B) containing the diene-based rubbery polymer (b2) is even more preferably 1 to 10 parts by mass.

As mentioned above, the weight average particle diameter of the rubbery polymer (b) of the component (B) used in the present invention is preferably 0.20 to 0.70 $\mu$m, particularly preferably 0.23 to 0.60 $\mu$m, and especially preferably 0.25 to 0.50 $\mu$m.

The component (B) may contain a rubber-reinforced vinyl-based graft resin (B) containing a rubbery polymer (b) having a weight average particle diameter outside the above range. However, when the rubber-reinforced vinyl-based graft resin (B) containing a rubbery polymer (b) having a weight average particle diameter of less than 0.15 $\mu$m is contained, the impact resistance of the resulting thermoplastic resin composition and the effect of suppressing the generation of creaking noise (rubbing noise) tend to be inferior.

For this reason, when the thermoplastic resin composition of the present invention contains a rubber-reinforced vinyl-based graft resin (B) containing a rubbery polymer (b) having a weight average particle diameter of less than 0.15 $\mu$m, the content is preferably 45 parts by mass or less, particularly preferably 30 parts by mass or less, and especially preferably 0 to 20 parts by mass, based on 100 parts by mass of the total of the component (A), the component (B), the component (C), and the component (D).

In the present invention, of 100% by mass of the component (B), it is preferable that 30% by mass or more, particularly 50% by mass or more, and especially 70 to 100% by mass is a rubber-reinforced vinyl-based graft resin (B) containing a rubbery polymer (b) having a weight average particle diameter of 0.20 to 0.70 $\mu$m.

The total content of the component (C) and the component (D) contained in the thermoplastic resin composition of the present invention is 20 to 65 parts by mass, preferably 25 to 60 parts by mass, and more preferably 30 to 55 parts by mass, based on 100 parts by mass of the total of the component (A), the component (B), the component (C), and the component (D).

When the total content of the component (C) and the component (D) is equal to or more than the above lower limit, the impact resistance and long-term durability due to the inclusion of the component (C) and the component (D) are excellent. When the total content of the component (C) and the component (D) is equal to or less than the above upper limit, the content of other components (A) and (B) can be secured to provide excellent impact resistance and chemical resistance.

The content of the component (D) contained in the thermoplastic resin composition of the present invention is 0.1 to 40 parts by mass, preferably 2 to 38 parts by mass, and more preferably 5 to 36 parts by mass, based on 100 parts by mass of the total of the component (A), the component (B), the component (C), and the component (D).

The component (D) is effective in suppressing the hydrolysis of the component (A) and improving the compatibility of the component (A) with the components (B) and the component (C). When the content of the component (D) is equal to or more than the above lower limit, it is possible to obtain a thermoplastic resin composition which exhibits above excellent effects due to the component (D) and is excellent in impact resistance, long-term durability, and suppression of creaking noise. When the content of the component (D) is too high, the components (D) react with each other, deteriorating the moldability and molded appearance of the thermoplastic resin composition. For this reason, the content of the component (D) is set to the above upper limit or less.

From the viewpoints of impact resistance and long-term durability, it is preferable that the content of the component (C) alone is less than 45 parts by mass, particularly less than 40 parts by mass, and especially less than 35 parts by mass, based on 100 parts by mass of the total of the component (A), the component (B), the component (C), and the component (D).

In the production of the component (B), it may be difficult to determine whether the resin (B-2) produced together with the above mentioned graft copolymer (B-1) corresponds to the component (C) or the component (D), depending on the type of the vinyl-based monomer used in the production of the component (B). Usually, when the vinyl-based monomer used in the production of the component (B) contains the above mentioned carboxyl group-containing unsaturated compound and/or the unsaturated acid anhydride, the resin (B-2) can be regarded as the component (D). When it does not contain the carboxyl group containing unsaturated compound and/or the unsaturated acid anhydride, the resin (B-2) is regarded as the component (C).

The content of the above mentioned rubbery polymer (b) derived from the component (B) and contained in the thermoplastic resin composition of the present invention is preferably 5 to 80 parts by mass, more preferably 10 to 70 parts by mass, even more preferably 15 to 65 parts by mass, and particularly preferably 20 to 60 parts by mass, based on 100 parts by mass of the total of the component (B), the component (C), and the component (D). When the content of the rubbery polymer (b) is within the above range, the mechanical strength and creaking noise reduction effect of the molded article made of the thermoplastic resin composition of the present invention are further improved.

For the same reasons as for the content of rubber-reinforced vinyl-based graft resin (B) containing the rubbery polymer (b) having a weight average particle diameter of 0.20 to 0.07 $\mu$m in the rubber-reinforced vinyl-based graft resin (B) described above, it is preferable that 30% by mass or more, particularly 50% by mass or more, and especially 70 to 100% by mass based on 100% by mass of the total of the rubbery polymer (b) contained in the thermoplastic resin composition of the present invention is a rubbery polymer (b) having a weight average particle diameter of 0.20 to 0.70 $\mu$m.

For the same reasons as for the case of containing rubber-reinforced vinyl-based graft resin (B) containing rubbery polymer (b) having a weight average particle diameter of less than 0.15 $\mu$m described above, it is preferable that the rubbery polymer (b) having a weight average particle diameter of less than 0.15 $\mu$m is 70% by mass or less, particularly 50% by mass or less, and especially 0 to 30% by mass based on 100% by mass of the total of the rubbery polymer (b) contained in the thermoplastic resin composition of the present invention.

<Melt Volume Rate (MVR)>

The melt volume rate (MVR) of the thermoplastic resin composition of the present invention is preferably 10 to 70 cm$^3$/10 min, particularly preferably 15 to 60 cm$^3$/10 min, and especially preferably 20 to 50 cm$^3$/10 min under conditions of 240°C and 98N. When the MVR is equal to or higher than the above lower limit, the composition has excellent moldability. When the MVR is equal to or lower than the above upper limit, the composition has excellent mechanical strength such as impact resistance.

The MVR of the thermoplastic resin composition of the present invention is measured by the method described in the Examples section below.

<Biobased product content>

The biobased product content of the thermoplastic resin composition of the present invention is preferably 20% or more, more preferably 25% or more, and even more preferably 30% or more, from the viewpoint of the carbon neutrality. The upper limit of the biobased product content of the thermoplastic resin composition of the present invention is not particularly limited, but is usually 70% or less from the viewpoint of blending the necessary amounts of the component (B), the component (C) and the component (D) with respect to the biomass-derived polyamide (A).

Here, the biobased product content of the thermoplastic resin composition of the present invention is determined as a percentage obtained by multiplying the mass ratio of the biomass-derived polyamide (A) in the thermoplastic resin composition by the biobased product content of the biomass-derived polyamide (A).

<Abnormal noise risk index>

The thermoplastic resin composition of the present invention preferably has an abnormal noise risk index of 5 or less, more preferably 3 or less, measured under the conditions of a temperature of 23°C, a humidity of 50% RH, a load of 5N and a speed of 1 mm/sec in a test measured using a stick-slip tester "SSP-002" manufactured by ZIEGLER by the method described in the Examples section below. According to the standard (VDA203-260) of The German Association of the Automotive Industry, it is considered acceptable when the abnormal noise risk index is 3 or less. Such a preferable abnormal noise risk index can be satisfied by appropriately adjusting the blending amounts of the components (A) to (D), and the like.

<Method for producing thermoplastic resin composition>

The thermoplastic resin composition of the present invention can be obtained by mixing the component (A), the component (B), the component (C), and the component (D) and other components used as desired in a desired blending ratio and melt-kneading the mixture. As described above, when the component (B) is produced by graft polymerization, the component (C) and/or the component (D) are also produced, so a mixture of the component (B) and the component (C) and/or the component (D) is obtained. The mixture of the component (B) and the component (C) and/or the component (D) can be used as it is as a raw material. In addition, the component (C) and/or the component (D) produced separately from the component (B) can be additionally mixed into the mixture. The component (C) and/or the component (D) produced during the production of the component (B) may have the same or different copolymerization composition, intrinsic viscosity, and other physical properties as the component (C) and/or the component (D) produced separately from the production of the component (B).

Examples of other components that can be blended into the thermoplastic resin composition of the present invention other than the components (A) to (D) include a nucleating agent, a lubricant, a heat stabilizer, an antioxidant, an ultraviolet absorber, an age resistor, a plasticizer, an antibacterial agent, a colorant, a filler, and the like. These components can be blended to the extent that the object of the present invention is not impaired.

The filler used is preferably fibrous or layered.

Examples of fiber-like filler include inorganic fiber such as glass fiber, ceramic whiskers, and the like, and organic fiber such as carbon fiber, aramid fibers, and the like.

Examples of the layer-like fillers include flake-like or plate-like fillers. Specific examples include montmorillonite, hectorite, vermiculite, saponite, glass flakes, and the like.

When the thermoplastic resin composition of the present invention contains a filler, the content of the filler is preferably 5 to 50 parts by mass, more preferably 8 to 35 parts by mass, and particularly preferably 10 to 25 parts by mass, based on 100 parts by mass of the total of the component (A), the component (B), the component (C), and the component (D). When the content of the filler is within the above range, the rigidity of the molded article obtained is more excellent, which is preferable.

The thermoplastic resin composition of the present invention can contain other thermoplastic resins other than the components (A) to (D) as necessary, within a range that does not impair the object of the present invention. Examples of other thermoplastic resins include polyvinyl chloride, polymethyl methacrylate resin, polycarbonate (PC) resin, polylactic acid resin, polystyrene resin, high impact polystyrene resin, ASA resin, and the like. Polyamide resins not derived from biomass may be blended. These may be used alone or in combination of two or more.

When blending other thermoplastic resins other than the components (A) to (D) in the thermoplastic resin composition of the present invention, from the viewpoint of effectively obtaining the effects of the present invention by using the components (A) to (D) in a predetermined ratio, it is preferable that the content of the other thermoplastic resins other than the components (A) to (D) is 50 parts by mass or less based on 100 parts by mass of the total of the components (A) to (D) and the other thermoplastic resins.

The thermoplastic resin composition of the present invention can be produced by mixing each component in a predetermined blending ratio using a tumbler mixer, a Henschel mixer, and the like, and then melt-kneading under appropriate conditions using a kneading machine such as a single-screw extruder, a twin-screw extruder, a Banbury mixer, a kneader, a roller, a feeder ruder, or the like. A preferred kneading machine is a twin-screw extruder.

For kneading the above components, they may be mixed and kneaded at once or in multiple stages. After the above mixture has been kneaded with a Banbury mixer, a kneader, or the like, the mixture may be formed into pellets with an extruder.

In the case where a fibrous filler is used, the fibrous filler is preferably fed to the middle of the extruder with a side feeder in order to prevent the filler from being cut during kneading.

The melt-kneading temperature is usually 200 to 300°C and is preferably 220 to 280°C.

[Molded Article]

When a molded article obtained by molding the thermoplastic resin composition of the present invention is used as at least one part of an article including at least two parts arranged in contact with each other, it is possible to suppress the generation of creaking noise in the article.

According to the present invention, an article including at least two parts that arranged in contact with each other, at least one of the parts being a molded article made of the thermoplastic resin composition of the present invention (hereinafter, sometimes referred to as the "article of the present invention") is provided. In this case, it is preferable that two or more parts are molded articles made of the thermoplastic resin composition of the present invention, and it is particularly preferable that all parts are molded articles made of the thermoplastic resin composition of the present invention.

There is no limitation on the method for producing the above molded article or the parts from the thermoplastic resin composition of the present invention. For example, injection molding, injection compression molding, gas-assisted molding, press molding, blow molding, and profile extrusion molding can be mentioned. Other known methods include film and sheet molding, such as calendar molding and T-die extrusion molding.

The thermoplastic resin composition of the present invention is suitable as a molding material for an article including at least two of the parts of the article are in constant or intermittent contact with each other, and when an external force such as a vibration, a torsion, or an impact is applied to the article, the contacting portions of the two parts move slightly or collide with each other. The contact mode in which the above contact portions are in contact with each other may be any of plane contact, line contact, and point contact. The above parts may be partially bonded to each other.

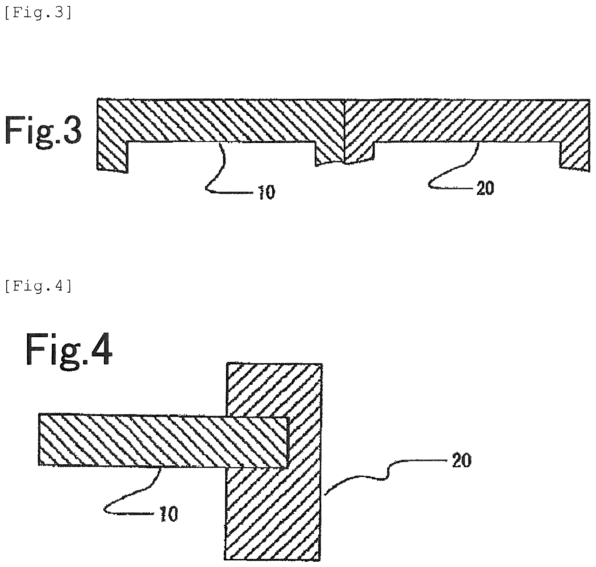

Specific examples thereof include an article including parts 10 and 20 bonded to each other such that a surface of the part 10 and a surface of the part 20 abut against each other as illustrated in Fig. 3; and an article including parts 10 and 20 arranged in contact with each other such that a part of the part 10 fits in a recess formed in the part 20 as illustrated in Figs. 4 to 8.

Specific examples of articles in which parts are in contact with each other in a fitted state include the following (1) to (4).

(1) An article including parts 10 and 20 arranged in contact with each other such that an end of the part 10 precisely fits in a complementary recess formed in the part 20, as illustrated in Fig. 4.

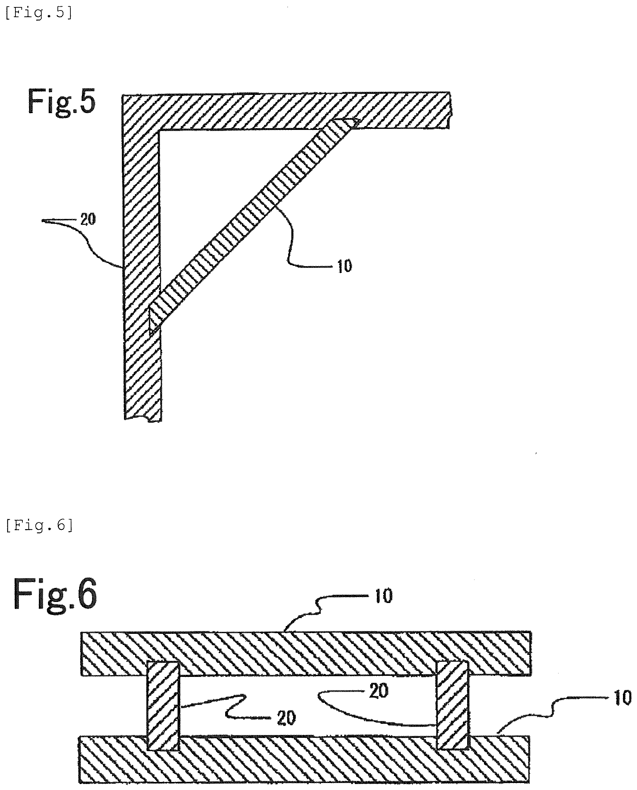

(2) An article including parts 10 and 20 arranged in contact with each other such that both ends of the part 10 precisely fit in respective complementary -recesses formed in the part 20 at a corner of the part 20, as illustrated in Fig. 5.

(3) An article including two parts 10 arranged substantially parallel to each other and a part 20 which are arranged in contact with each other such that both ends of the part 20 precisely fit in respective complementary recesses formed in the parts 10, as illustrated in Fig. 6.

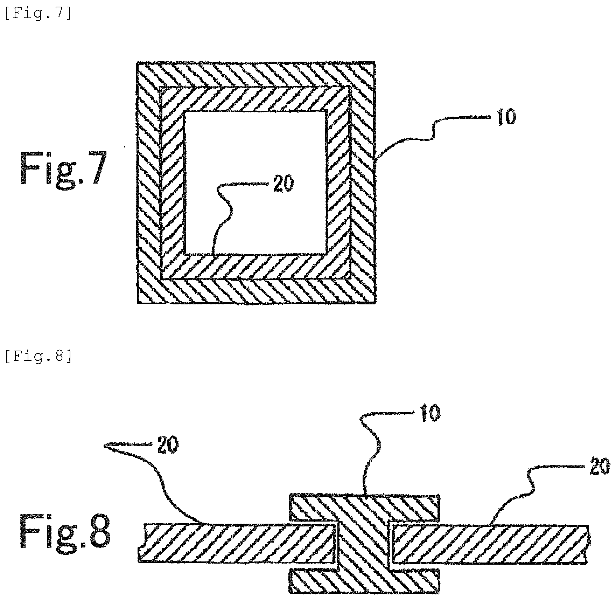

(4) An article including parts 10 and 20 arranged in contact with each other, the part 20 including an outer surface having the same dimensions as the inner surface of the part 10, such that the part 20 is inserted in the part 10 in a nesting manner and the inner surface of the part 10 and the outer surface of the part 20 precisely fit to each other, as illustrated in Fig. 7.

The two parts included in the article according to the present invention are not necessarily arranged to precisely fit to each other. The article according to the present invention may be an article including parts that are arranged to fit to each other with a certain amount of gap or play therebetween as illustrated in Fig. 8 and that repeatedly come into contact with and detach from each other upon an external force, such as a vibration, a torsion, or an impact, being applied to the article.

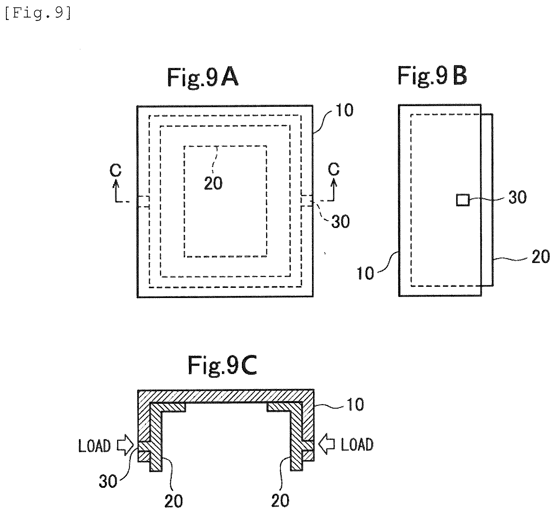

Examples of the article including the above-described contact portions in a composite manner include the article illustrated in Figs. 9A to 9C. A part 10 included in the article illustrated in Figs. 9A to 9C is a box-like part that is a rectangular parallelepiped with a bottom surface being completely opened. A part 20 is a molded article that has a shape similar to that of the part 10 and has a rectangular opening formed at the center of the upper surface. As illustrated in Figs. 9A to 9C, the part 20 can be fit into the part 10. The outer peripheral surface of the part 20 and the inner peripheral surface of the part 10 come into contact with each other. Upon an external force, such as a vibration, being applied to the parts 10 and 20, they become slightly deformed and repeatedly come into contact with and detach from each other.

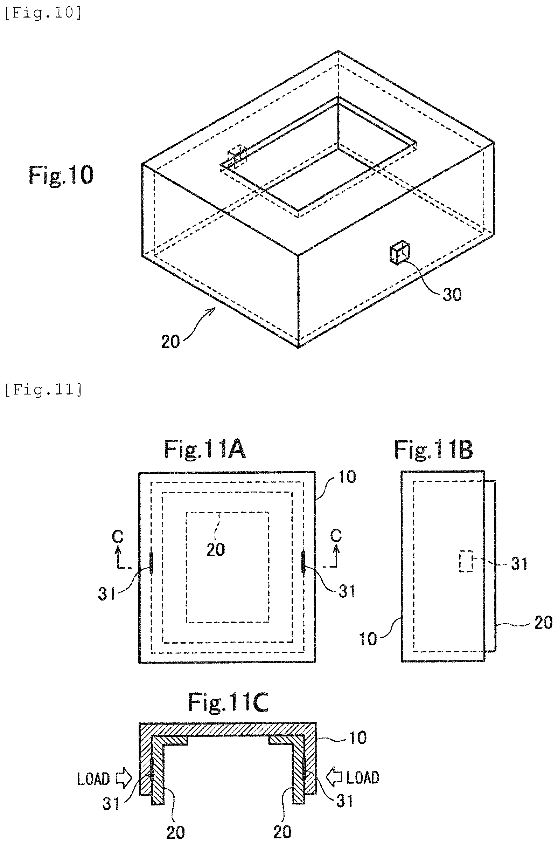

The part 20 includes protrusions 30 formed in two opposing outer faces as illustrated in Fig. 10. The part 10 has holes formed in two opposing side faces, which accommodate the respective protrusions 30 of the part 20, as illustrated in Figs. 9A to 9C. When the part 10 is fit to the part 20, the protrusions 30 fit into the holes by a snap-fit mechanism. This prevents the fit between the parts from being easily broken.

When at least one of the parts 10 and 20 is formed of the thermoplastic resin composition of the present invention, the occurrence of the creaking noises can be prevented even in the case where, for example, an external force is applied to the parts in the direction of the arrow illustrated in Fig. 9C. The direction of the external force is not limited to the direction illustrated in Fig. 9C. Even in the case where an external force is applied to the parts in another direction, the occurrence of the creaking noises can be prevented when at least one of the parts 10 and 20 is formed of the thermoplastic resin composition of the present invention. The shape of the cross sections of the protrusions 30 and the shape of the holes formed in the part 10 illustrated in Figs. 9A to 9C may be changed such that the parts 10 and 20 are fit to each other by a press-fit mechanism.

Figs. 11A to 11C illustrate the same article as that illustrated in Figs. 9A to 9C, except that the inner surface of the part 10 and the outer surface of the part 20 are partially bonded to each other with an adhesive 31 instead of forming the protrusions 30 and the holes for snap-fitting in the parts 10 and 20. Alternatively, the parts 10 and 20 may be welded to each other by laser welding or the like instead of using the adhesive 31. This method is advantageous when the parts 10 and 20 are thermoplastic resin molded articles. In particular, in the case where laser welding is used, it is preferable to use a transparent thermoplastic resin transparent to a laser beam in combination with a part formed of a thermoplastic resin which absorbs a laser beam. Specific examples of such products include measuring instruments, such as an on-vehicle speed indicator, and lighting.

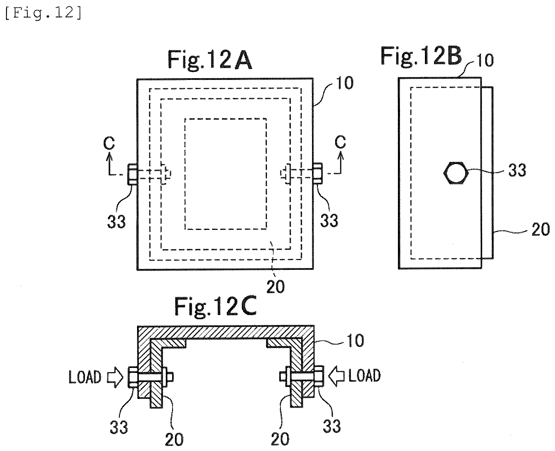

The example illustrated in Figs. 12A to 12C is the same as the article illustrated in Figs. 9A to 9C, except that holes are formed in two opposing side faces of the parts 10 and 20 such that the holes of the part 10 face the respective holes of the part 20 and the parts 10 and 20 are fastened and fixed with bolts and nuts 33 through the two holes. The parts 10 and 20 may be fixed using screws, pins, rivets, bushings, brackets, hinges, nails, or the like instead of bolts and nuts.

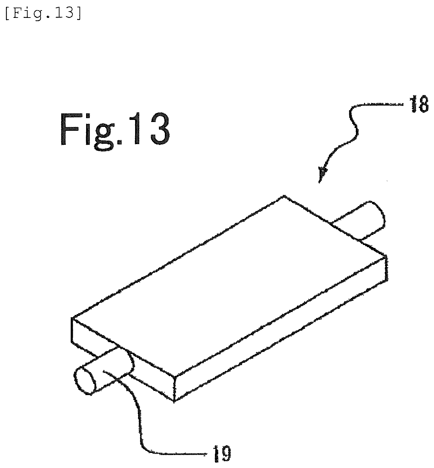

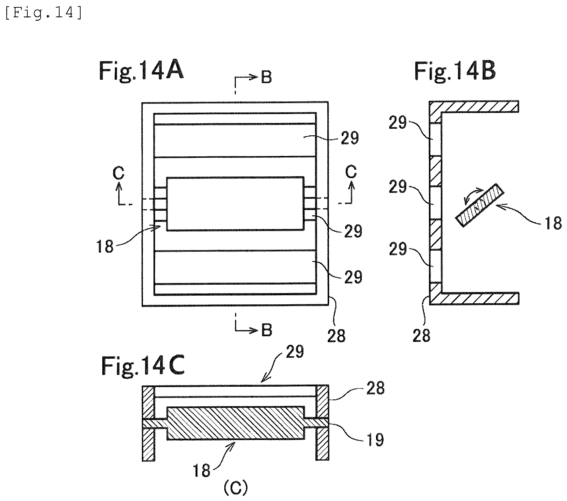

The article illustrated in Figs. 14A to 14C which includes a part 18 including a rectangular plate-like main body and a cylindrical shaft 19 protruded from both ends of the main body outwardly in the longitudinal direction as illustrated in Fig. 13 and a frame-like part 28 in which the shaft 19 of the part 18 is inserted, the part 28 supporting the part 18 such that the part 18 is rotatable about the shaft 19, is also suitably formed using the thermoplastic resin composition of the present invention. Forming at least one of the parts 18 and 28 using the thermoplastic resin composition of the present invention reduces the likelihood of creaking noises being emitted when the part 18 is rotated about the shaft 19 or when an external force, such as a vibration, is applied to the article.

In the case where the frame-like part 28 includes a plurality of openings 29 as illustrated in Figs. 14A to 14C, the article can be suitably used as an apparatus capable of adjusting the amount of air flows and the direction in which the air flows by changing the angle of the part 18. Examples of such an apparatus include outlets of a domestic air conditioner, an automotive air conditioner, an air cleaner, a blower, and the like.

When a molded article includes the parts 10 and 20 or the parts 18 and 28, and at least one of the parts 10 and 20 or at least one of the parts 18 and 28 is formed of the thermoplastic resin composition of the present invention, the article can markedly reduce the occurrence of the creaking noises. The other part may also be the molded article formed of the thermoplastic resin composition of the present invention.

Examples of materials constituting parts made of materials other than the thermoplastic resin composition of the present invention include various thermoplastic resins, thermosetting resins, rubber, organic materials, inorganic materials, and metal materials.

Examples of the thermoplastic resin that constitutes a part made of a material other than the thermoplastic resin composition of the present invention include polyvinyl chloride, polyethylene, polypropylene, AS resin, ABS resin, AES resin, ASA resin, polymethyl methacrylate resin, polystyrene resin, high impact polystyrene resin, ethylene-vinyl acetate (EVA) resin, polyamide (PA) resin, polyethylene terephthalate resin, polybutylene terephthalate resin, polycarbonate (PC) resin, polylactic acid resin, PC/ABS resin, PC/AES resin, PA/ABS resin, PA/AES resin, and the like. These may be used alone or in combination of two or more.

Examples of the thermosetting resin that constitutes a part made of a material other than the thermoplastic resin composition of the present invention include a phenolic resin, an epoxy resin, a urea resin, a melamine resin, an unsaturated polyester resin, and the like. These may be used alone or in combination of two or more.

Examples of the rubber that constitutes a part made of a material other than the thermoplastic resin composition of the present invention include various synthetic rubbers such as chloroprene rubber, polybutadiene rubber, ethylene-propylene rubber, SEBS, SBS, SIS, and the like, natural rubber, and the like. These may be used alone or in combination of two or more.

Examples of the organic material that constitutes a part made of a material other than the thermoplastic resin composition of the present invention include an insulation board, an MDF (medium-density fiberboard), a hardboard, a particleboard, a lumber core, an LVL (laminated veneer lumber), an OSB (oriented strand board), a PSL (Parallam), a WB (waferboard), a hard fiberboard, a soft fiberboard, a lumber core plywood, a board core plywood, a special core plywood, a veneer-core veneer board, a laminated paper sheet or board impregnated with a tap resin, a board formed by mixing small pieces or filaments prepared by crushing (waste) paper or the like with an adhesive and heating and compressing the resulting mixture, various types of lumber, and the like. These may be used alone or in combination of two or more types.

Examples of the inorganic material that constitutes a part made of a material other than the thermoplastic resin composition of the present invention include a calcium silicate board, a flexible board, a homocement board, a gypsum board, a gypsum sheathing board, a reinforced gypsum board, a gypsum lath board, a decorated gypsum board, a composite gypsum board, various ceramics, glass, and the like. These may be used alone or in combination of two or more.

Examples of the metal material that constitutes a part made of a material other than the thermoplastic resin composition of the present invention include iron, aluminum, copper, various alloys, and the like. These may be used alone or in combination of two or more.

Among these, thermoplastic resins, thermosetting resins, and rubber are preferred, and ABS resin, AES resin, PC resin, ABS resin, PC/AES resin, and polymethyl methacrylate resin are particularly preferred.

When at least one of the parts of the article of the present invention is molded from the thermoplastic resin composition of the present invention, the generation of creaking noise is suppressed even when the parts repeatedly come into and out of contact with each other due to vibration, sliding, and the like. For this reason, the article of the present invention can be suitably used for automobile parts, office equipment parts, housing parts, home appliance parts, and the like.

When an automobile part is molded from the thermoplastic resin composition of the present invention, it is possible to significantly reduce the generation of creaking noise, even when the part repeatedly comes into and out of contact with other parts due to, for example, vibrations while the vehicle is running.

When the thermoplastic resin composition of the present invention contains a diene-based rubber, it has excellent fracture properties at low temperatures and is therefore particularly suitable for use in automobile interior parts.

Examples of such an automobile part include a door trim, a door lining, a pillar garnish, a console, a door pocket, a ventilator, a duct, a plate-shaped blade of an air conditioner, a valve shutter, a louver, a meter visor, an instrument panel upper garnish, an instrument panel lower garnish, an A/T indicator, on/off switches (a slide portion and a slide plate), a grill front defroster, a grill side defroster, a lid cluster, a lower instrument cover, masks (a mask switch, a mask radio, and the like.), a glove box, pockets (a pocket deck, a pocket card, and the like.), a steering wheel horn pad, a switch part, an exterior part for a car navigation system, and the like. Among these, it is particularly suitable for use as a ventilator, a plate-shaped blade of an air conditioner, a valve shutter, a louver, a switch part, an exterior part for car navigation system, and the like.

When office equipment parts are molded from the thermoplastic resin composition of the present invention, it is possible to significantly reduce the generation of creaking noise even when the parts repeatedly come into and out of contact with other parts due to, for example, vibrations during operation of the equipment, or opening and closing of desk drawers.

When housing parts are molded from the thermoplastic resin composition of the present invention, it is possible to significantly reduce the generation of creaking noise even when the parts repeatedly come into and out of contact with other parts due to, for example, opening and closing of doors and sliding doors.

When home appliance parts are molded from the thermoplastic resin composition of the present invention, it is possible to significantly reduce the generation of creaking noise even when the parts repeatedly come into and out of contact with other parts due to, for example, vibrations during operation of the equipment. Examples of such home appliance parts include exterior parts such as cases, housings, and the like, interior parts, parts around switches, parts of moving parts, and the like.

The molded article of the present invention not only reduces the generation of creaking noise, but also has a good feel touch and high rigidity. Therefore, the molded article of the present invention is particularly suitable for, for example, parts for electric or electronic equipment, optical equipment, lighting equipment, office equipment, or home appliance parts, automotive interior parts, housing interior parts, and the like. In particular, the molded article of the present invention is particularly suitable for parts of vehicles such as automotive parts that may be touched by hand, such as grips such as an assist grip, and the like, parts such as a handle and a door knob, and portable articles.

Examples pf parts of the electrical or electronic equipment and the optical equipment include housings and covers for cameras such as a digital video camera and a still camera, housings and covers for a handheld computer, a mobile phone, a mobile information terminal, and the like, which are often touched by the hands.

Examples of parts for the lighting equipment include a panel, a cover, a connector, switch peripheral parts, and the like for ceiling lights.

Examples of parts for the office equipment include exterior parts such as a casing, a housing, and the like, interior parts, switch peripheral parts, movable parts, desk lock parts, desk drawers, paper trays for copy machines, and the like.

Examples of parts for the home appliance parts include exterior parts such as casing, a housing, and the like, interior parts, switch peripheral parts, movable parts, and the like.

Examples of automotive interior part include grips such as a doorknob, a handle, and an assist grip and the like, as well as a door trim, a door lining, a pillar garnish, a console, a console box, a center panel, a door pocket, a ventilator, a duct, an air conditioner, a meter visor, an instrument panel upper garnish, an instrument panel lower garnish, an A/T indicator, on-off switches (a slide part and a slide plate), a switch bezel, a grill front defroster, a grill side defroster, a lid cluster, a lower instrument cover, masks (a mask switch, a mask radio, and the like), a glove box, pockets (a pocket deck, a pocket card, and the like), a steering wheel horn pad, a switch part, an exterior part for car navigation system, and the like.

Examples of the housing interior part include a door knob, a shelf door, a chair damper, a movable part for foldable table legs, a door opening and closing damper, a sliding door rail, a curtain rail, and the like.

EXAMPLES

The present invention is described further specifically with reference to Examples below. The present invention is not limited only to Examples below.

In the following, part and % are on a mass basis unless otherwise specified.

[Measurement and Evaluation Methods]

The methods for measuring and evaluating various physical properties and characteristics in the following Examples and Comparative Examples are as follows.

(1) Measurement of melt volume rate (MVR)

A thermoplastic resin composition was measured in accordance with ISO 1133. MVR is an indicator of the flowability, i.e., moldability, of a thermoplastic resin composition.

(2) Evaluation of resistance to moist heat aging based on melt volume rate (MVR)

A pellet of a thermoplastic resin composition was allowed to stand for 500 hours in a thermo-hygrostat "PL-2SPH" manufactured by Espec Corporation under conditions of 60°C and 80% RH, and then the pellet was taken out from the thermo-hygrostat, and a melt volume rate (MVR) was measured as described above. The rate of change in the MVR was calculated by the following formula. The smaller the rate of change, the better the resistance to moist heat aging.

Rate of change in MVR due to moist heat aging (%) = (MVR after moist heat aging/MVR before moist heat aging) $\times$ 100

(3) Evaluation of impact resistance based on V-notched Charpy impact strength

A thermoplastic resin composition was injection molded using an injection molding machine "IS-170FA" (product name) manufactured by Toshiba Machine Co., Ltd. at a cylinder temperature of 250°C, an injection pressure of 80 MPa, and a mold temperature of 60°C, to obtain molded piece having a length of 80 mm, a width of 10 mm, and a thickness of 4 mm. A V-notched Charpy impact strength ($kJ/m^2$) of the test piece was measured in accordance with ISO test method 179 under conditions of measurement temperatures of 23°C and -30°C, and a test piece thickness of 4 mm.

(4) Evaluation of moisture absorption impact resistance based on V-notched Charpy impact strength

The above mentioned molded test piece for the V-notched Charpy test was allowed to stand for 168 hours in a thermo-hygrostat "PL-2SPH" manufactured by Espec Corporation under conditions of 23°C and 50% RH, and then the test piece was removed from the thermo-hygrostat and a Charpy impact strength was measured as described above. The rate of change in the Charpy impact strength was calculated by the following formula. The closer the rate of change is to 100%, the less likely it is to absorb moisture.

Rate of change in Charpy impact strength due to moisture absorption (%) = (Charpy impact strength after moisture absorption/Charpy impact strength before moisture absorption) $\times$ 100

(5) Evaluation of chemical resistance using sunscreen cream

A rectangular test piece (150 mm x 10 mm x 2 mm) made by injection molding a thermoplastic resin composition under the same conditions as in (3) above was fixed along a bending form method test jig having a surface whose curvature gradually changes. Then, a chemical solution was applied to the test piece and it was left in an environment of 23°C for 48 hours. The test piece after leaving was checked for the occurrence of crazes and cracks, and a limit strain [%] was calculated from a curvature of the test jig. Sunscreen cream ("Anessa" manufactured by Shiseido Co., Ltd.) was used as the chemical solution.
The larger the limit strain value, the better the chemical resistance.

(6) Measurement of creaking noise evaluation (abnormal noise risk index) after thermal deterioration

A thermoplastic resin composition was injection molded using an injection molding machine "IS-170FA" (product name) manufactured by Toshiba Machine Co., Ltd. under conditions of a cylinder temperature of 250°C, an injection pressure of 50 MPa, and a mold temperature of 60°C, to obtain a molded article having a length of 150 mm, a width of 100 mm, and a thickness of 4 mm. Two test pieces, that is, a test piece having a length of 60 mm, a width of 100 mm, and a thickness of 4 mm and a test piece having a length of 50 mm, a width of 25 mm, and a thickness of 4 mm, were taken from the molded article with a disc saw. The edges of the test pieces were chamfered with a #100-grit sandpaper. Subsequently, fine burrs were removed with a cutter knife. Hereby, large and small test pieces for creaking noise evaluation were prepared.
The evaluation test pieces were left for 300 hours in an oven kept at 80°C $\pm$ 5°C and then cooled for 24 hours at 25°C to obtain thermally aged test pieces for evaluation. Two thermally aged test pieces, one large and one small, were placed in a stick-slip tester "SSP-02" manufactured by ZIEGLER. The two test pieces were rubbed against each other 3 times at an amplitude of 20 mm under conditions of a temperature of 23°C, humidity of 50% RH, a load of 5 N, and a speed of 1 mm/sec. Then, the abnormal noise risk index was measured.
The larger the abnormal noise risk index, the more likely it is that the creaking noise will occur. Since an evaluation is made by performing thermally aging in this testing method, the sustainability of the creaking noise reduction effect can also be evaluated.

(7) Evaluation of creaking noise (abnormal noise risk index) after moisture absorption

The above creaking noise evaluation test piece was left in an oven tank adjusted to 80°C $\pm$ 5°C for 300 hours, and then cooled at 25°C for 24 hours to obtain a thermally aged evaluation test piece. Then the test piece was allowed to stand for 168 hours in a thermo-hygrostat "PL-2SPH" manufactured by Espec Corporation under conditions of 25°C and 50% RH. A abnormal noise index was measured for the obtained evaluation test piece in the same manner as above.

(8) Heat resistance (HDT)

In accordance with ISO 75-2: 2013 edition, a deflection temperature was measured by the 1.8 MPa load flatwise method.

[Raw materials used]

In the following Examples and Comparative Examples, the raw materials used in the production of the thermoplastic resin composition were the following commercially available products or those produced according to the following production Examples.

<Polyamide (A)>

The following commercially available products were used as the polyamide (A).

PA11: "Rilsan BMNO" (polyamide 11, biobased product content: 100%, melting point: 190°C) manufactured by Arkema
PA1010: "Vestamid Terra DS22" (polyamide 1010, biobased product content: 100%, melting point: 200°C) manufactured by Daicel-Evonik
PA610: "Rilsan SMVO" (polyamide 610, biobased product content: 62%, melting point: 225°C) manufactured by Arkema

<Production Example 1: Production of mixed product of component (B1) and component (C1)>

Into a stainless steel autoclave having a volume of 20 liters which was equipped with a ribbon type agitator blade, an agent continuous addition device, a thermometer, and the like, 30 parts of an ethylene-propylene copolymer (ethylene unit/propylene unit = 78/22 (%), Mooney viscosity (ML1+4,100°C): 20, melting point (Tm): 40°C, glass transition temperature (Tg): -50°C) used as an ethylene-$\alpha$-olefin-based rubbery polymer (a), 50 parts of styrene, 20 parts of acrylonitrile, 0.5 parts of t-dodecylmercaptan, and 110 parts of toluene were charged. The temperature of the inside of the autoclave was increased to 75°C. Then, the contents of the autoclave were stirred for 1 hour to form a uniform solution. Subsequently, 0.45 parts of t-butylperoxy isopropyl monocarbonate was added to the solution. Then, the internal temperature was further increased. After the temperature had reached 100°C, while the temperature was maintained at 100°C, a polymerization reaction was conducted at a stirring rotation speed of 100 rpm. After 4 hours since the polymerization reaction was started, the internal temperature was increased to 120°C. Then, while the temperature was maintained at 120°C, the reaction was conducted another 2 hours. Subsequently, the polymerization reaction was finished. The polymerization conversion ratio was 98%.

Then, the internal temperature was reduced to 100°C, and 0.2 parts of octadecyl-3-(3,5-di-t-butyl-4-hydroxyphenol)-propionate and 0.02 parts of dimethyl silicone oil; KF-96-100cSt (product name: manufactured by Shin-Etsu Silicone Co., Ltd.) were added. Then, the resulting reaction mixture was removed from the autoclave, and unreacted substances and solvents were distilled away by steam distillation. Furthermore, volatile matter was substantially degassed and the reaction mixture was formed into pellets with an extruder having a 40-mm diameter vent (cylinder temperature: 220°C, degree of vacuum: 760 mmHg).

In the obtained ethylene-$\alpha$-olefin-based rubber-reinforced aromatic vinyl-based resin (B1) (a mixture of a component (B1), which is the rubber-reinforced vinyl-based graft resin (B), and a component (C1), which is the aromatic vinyl-based copolymer resin (C)), the content of ethylene-$\alpha$-olefin-based rubbery polymer was 30% (calculated from the polymerization conversion rate), the content of the acetone insoluble component was 47%, the content of the acetone soluble component was 53%, the graft ratio was 55%, the intrinsic viscosity [$\eta$] of the acetone soluble component was 0.33 dL/g, and the melting point measured in accordance with JIS K7121-1987 was 40°C. In addition, the weight average particle diameter (volume average particle diameter) and number average particle diameter of the ethylene-$\alpha$-olefin-based rubbery polymer in the solution polymerization system, determined by the above mentioned measurement method 2 (transmission electron microscope photoresolution processing), were 0.45 $\mu$m and 0.35 $\mu$m, respectively.

<Production Example 2: Production of mixed product of component (B2) and component (C2)>

100 parts of an ethylene-propylene copolymer similar to that used in Production Example 1, 20 parts of maleic anhydride-modified polyethylene ("Mitsui Hiwax 2203A" manufactured by Mitsui Chemicals, Inc., mass average molecular weight: 2,700, acid value: 30 mg/g) as an acid-modified olefin polymer, and 5 parts of potassium tallow fatty acid (mixture of potassium oleate, potassium stearate, and potassium palmitate) as an anionic emulsifier were mixed to obtain a mixture. This mixture was fed from a hopper of a twin-screw extruder ("PCM30" manufactured by Ikegai Corporation, L/D = 40) at 4 kg/Hr, and was heated to 220°C, melt-kneaded, and extruded while continuously feeding an aqueous solution of 0.5 parts of potassium hydroxide and 2.4 parts of ion-exchanged water from a feed port provided in the vent of the twin-screw extruder. The melt-kneaded product was continuously fed to a cooling device equipped to the tip of the twin-screw extruder and cooled to 90°C. Then, the solid discharged from the tip of the twin-screw extruder was put into 80°C warm water and continuously dispersed, therein diluting the solid concentration to approximately 40%, to obtain an olefin resin aqueous dispersion. The particle size of the ethylene-$\alpha$-olefin-based rubbery polymer in the obtained olefin resin was determined by the above mentioned measurement method 1 (dynamic light scattering method). The weight average particle diameter was 0.40 $\mu$m (number average particle diameter: 0.26 $\mu$m).

The olefin resin aqueous dispersion (60 parts as solid content of ethylene-propylene copolymer) was charged in a stainless steel polymerization tank equipped with a stirrer, ion-exchanged water was added to the olefin resin aqueous dispersion so that the solid content concentration was 30%, 0.006 parts of ferrous sulfate, 0.3 parts of sodium pyrophosphate, 0.35 parts of fructose, and 1.0 parts of potassium tallow fatty acid (mixture of potassium oleate, potassium stearate, and potassium palmitate) were charged, and the temperature was set to 80°C. To this, 30 parts of styrene, 10 parts of acrylonitrile, and 1.0 part of cumene hydroperoxide were added continuously for 150 minutes, and emulsion polymerization was carried out while maintaining the polymerization temperature at 80°C to obtain an aqueous dispersion containing ethylene-$\alpha$-olefin-based rubber-reinforced aromatic vinyl-based resin. An antioxidant was added to the aqueous dispersion containing the rubber-modified graft polymer, and solids were precipitated with sulfuric acid. After dehydration, washing, and drying, a powdery ethylene-$\alpha$-olefin-based rubber-reinforced aromatic vinyl-based resin was obtained.

In the obtained ethylene-$\alpha$-olefin-based rubber-reinforced aromatic vinyl-based resin (B2) (a mixture of a component (B2), which is the rubber-reinforced vinyl-based graft resin (B), and a component (C2), which is the aromatic vinyl-based copolymer resin (C)), the content of ethylene-$\alpha$-olefin-based rubbery polymer was 60% (calculated from the polymerization conversion rate), the content of the acetone insoluble component was 84%, the content of the acetone soluble component was 16%, the graft ratio was 40%, the intrinsic viscosity [$\eta$] of the acetone soluble component was 0.33 dL/g, and the melting point measured in accordance with JIS K7121-1987 was 42°C.

The average particle diameter measurements for the following components (B3) and (B5) were taken using the above mentioned measurement method 1 (dynamic light scattering method).

<Production Example 3: Production of mixed product of component (B3) and component (C3)>

Into a glass flask having a volume of 7 liters which was equipped with a stirrer, 75 parts of ion-exchanged water, 0.5 parts of potassium rosinate, 0.1 parts of t-dodecyl mercaptan, 40 parts (solids) of polybutadiene rubber latex (weight average particle diameter: 0.40 $\mu$m, number average particle diameter: 0.26 $\mu$m, gel content: 85%), 15 parts of styrene, and 5 parts of acrylonitrile were added in a nitrogen stream, and the mixture was heated while stirring. When the internal temperature reached 45°C, a solution of 0.2 parts of sodium pyrophosphate, 0.01 parts of ferrous sulfate heptahydrate, and 0.2 parts of glucose dissolved in 20 parts of ion-exchanged water was added, and further stirred. Then, 0.07 parts of cumene hydroperoxide was added to initiate polymerization.

After polymerization for 1 hour, 50 parts of ion-exchanged water, 0.7 parts of potassium rosinate, 45 parts of styrene, 15 parts of acrylonitrile, 0.05 parts of t-dodecyl mercaptan, and 0.01 parts of cumene hydroperoxide were added continuously over a period of 3 hours. The polymerization was continued for 1 hour, and 0.2 parts of 2,2'-methylene-bis(4-ethyl-6-t-butylphenol) was added to complete the reaction. The polymerization conversion rate was 98%. The resin component of the latex reaction product was coagulated with an aqueous sulfuric acid solution, washed with water, and then dried to obtain a rubber-reinforced aromatic vinyl-based resin (B3) (a mixture of a component (B3), which is the rubber-reinforced vinyl-based graft resin (B), and a component (C3), which is the aromatic vinyl-based copolymer resin (C)).

In the obtained butadiene rubber-reinforced aromatic vinyl-based resin, the content of polybutadiene rubber was 40% (measured using pyrolysis gas chromatography), the content of the acetone insoluble component was 67%, the content of the acetone soluble component was 33%, the graft ratio was 68%, the intrinsic viscosity [$\eta$] of the acetone soluble component was 0.45 dL/g, and no melting point was observed when measured in accordance with JIS K7121-1987.

<Production Example 4: Production of mixed product of component (B4) and component (D4)>

The synthesis was carried out in the same manner as in Production Example 3, except that the styrene and acrylonitrile were changed to 43 parts of styrene, 14 parts of acrylonitrile, and 3 parts of methacrylic acid. In the obtained butadiene rubber-reinforced aromatic vinyl-based resin (B4) (a mixture of a component (B4), which is the rubber-reinforced vinyl-based graft resin (B), and a component (D4), which is the acid-modified vinyl-based resin (D). This mixture may also contain the aromatic vinyl-based copolymer resin (C), but in a very small amount. It is referred to as a mixture of the component (B4) and the component (D4)), the content of the polybutadiene rubber was 40% (measured using pyrolysis gas chromatography), the content of the acetone insoluble component was 52%, the content of the acetone soluble component was 48%, the graft ratio was 30%, the intrinsic viscosity [η] of the acetone soluble component was 0.56 dL/g, and no melting point was observed when measured in accordance with JIS K7121-1987.

<Production Example 5: Production of mixed product of component (B5) and component (C5)>

Into a glass flask having a volume of 7 liters which was equipped with a stirrer, 75 parts of ion-exchanged water, 0.5 parts of potassium rosinate, 0.1 parts of t-dodecyl mercaptan, 40 parts (solids) of polybutadiene rubber latex (weight average particle diameter: 0.10 μm, number average particle diameter: 0.08 μm, gel content: 85%), 15 parts of styrene, and 5 parts of acrylonitrile were added in a nitrogen stream, and the mixture was heated while stirring. When the internal temperature reached 45°C, a solution of 0.2 parts of sodium pyrophosphate, 0.01 parts of ferrous sulfate heptahydrate, and 0.2 parts of glucose dissolved in 20 parts of ion-exchanged water was added and further stirred. Then, 0.07 parts of cumene hydroperoxide was added to initiate polymerization.

After polymerization for 1 hour, 50 parts of ion-exchanged water, 0.7 parts of potassium rosinate, 45 parts of styrene, 15 parts of acrylonitrile, 0.05 parts of t-dodecyl mercaptan, and 0.01 parts of cumene hydroperoxide were added continuously over a period of 3 hours. The polymerization was continued for 1 hour, and 0.2 parts of 2,2'-methylene-bis(4-ethyl-6-t-butylphenol) was added to complete the reaction. The polymerization conversion rate was 98%. The resin component of the latex reaction product was coagulated with an aqueous sulfuric acid solution, washed with water, and then dried to obtain a rubber-reinforced aromatic vinyl-based resin (B5) (a mixture of a component (B5), which is the rubber-reinforced vinyl-based graft resin (B), and a component (C5), which is the aromatic vinyl-based copolymer resin (C)).

In the obtained butadiene rubber reinforced aromatic vinyl-based resin, the content of polybutadiene rubber was 40% (measured using pyrolysis gas chromatography), the content of the acetone insoluble component was 67%, the content of the acetone soluble component was 33%, the graft ratio was 68%, the intrinsic viscosity [η] of the acetone soluble component was 0.45 dL/g, and no melting point was observed when measured in accordance with JIS K7121-1987.

<Aromatic vinyl-based resin (C)>

AS resin "SAN-H" (product name) (intrinsic viscosity [η]: 0.80 dL/g) manufactured by Techno-UMG Co., Ltd, was used.

<Production Example 6: Production of acid-modified vinyl-based resin (D)>

Into a reactor equipped with a stirrer, 250 parts of water, 3 parts of sodium laurate, 0.2 parts of t-dodecyl mercaptan, 0.4 parts of sodium formaldehyde sulfoxylate, 0.0025 parts of ferrous sulfate, 0.01 parts of disodium ethylenediaminetetraacetate, and 0.5 parts of cumene hydroperoxide were charged, and the reactor was deoxygenated. Then, 73 parts of α-methylstyrene were charged while stirring at 60°C in a nitrogen stream. After sufficient emulsification, 17 parts of acrylonitrile, a component other than α-methylstyrene, were continuously dropped over 5 hours to carry out copolymerization, and the polymerization was terminated when the polymerization conversion rate reached 85.0%.

Then, 0.5 parts of cumene hydroperoxide, 0.05 parts of t-dodecyl mercaptan, 0.4 parts of sodium formaldehyde sulfoxylate, 0.0025 parts of ferrous sulfate, and 0.01 parts of disodium ethylenediaminetetraacetate were further charged to the polymerization solution. Thereafter, 2 parts of styrene, 3 parts of acrylonitrile, and 5 parts of methacrylic acid were continuously dropped over 0.5 hours while stirring at 60°C in a nitrogen stream to carry out copolymerization. After completion of the dropwise addition, the mixture was stirred at 60°C for 1.5 hours to terminate the polymerization. The final polymerization conversion rate was 96.0%. The residual monomer amounts in the reactor were 1.4% for α-methylstyrene, 0.2% for styrene, 1.2% for acrylonitrile, and 1.2% for methacrylic acid relative to the total amount of monomers used in the polymerization. Then, it was solidified with calcium chloride, and the acid-modified vinyl -based resin (D) having an intrinsic viscosity [η] of 0.31 dL/g was recovered using a vented extruder "DMG40mm" (model name) manufactured by Nippon Placon Co., Ltd.

<Filler>

Glass fiber: Glass fiber "MA FT698" (product name) (fibrous, fiber length 3 mm, fiber diameter 13 $\mu$m) manufactured by Owens Corning Corporation was used.

<Other thermoplastic resin>

PA6: Polyamide resin "Novamid 1015" (product name) (polyamide 6, biobased product content: 0%, melting point: 225°C) manufactured by Mitsubishi Engineering-Plastics Corporation was used.

[Examples 1-30, Comparative Examples 1-9]

The components shown in Tables 1 to 5 were mixed in the proportions shown in Tables 1 to 5 using a Henschel mixer, then melt-kneaded in a twin-screw extruder (TEX44$\alpha$ manufactured by Japan Steel Works, Ltd., barrel set temperature 250°C) and pelletized to obtain a thermoplastic resin composition.
The obtained thermoplastic resin composition was subjected to the above mentioned measurements and evaluations, and the results were shown in Tables 1 to 5.
Tables 1 to 5 also show the biobased product content of the produced thermoplastic resin composition.

[Table 1]

<Table 1>

| | | | Example | | | | | | |
|---|---|---|---|---|---|---|---|---|---|
| | | | 1 | 2 | 3 | 4 | 5 | 6 | 7 |
| Biomass polyamide (A) | PA11 | | 22 | 27 | 32 | 40 | 57 | 62 | 67 |
| | PA1010 | | | | | | | | |
| | PA610 | | | | | | | | |
| Rubber-rein-forced aro-matic vinyl-based resin (Component (B) + Component (C), (D)) | Rubber-reinforced aromatic vinyl-based resin (B2) | | 15 | 15 | 15 | 15 | 15 | 15 | 15 |
| | Details | Component (B) | 13 | 13 | 13 | 13 | 13 | 13 | 13 |
| | | Component (C) | 2 | 2 | 2 | 2 | 2 | 2 | 2 |
| | | Component (D) | | | | | | | |
| Acid-modified vinyl-based resin (D) | | | 30 | 30 | 30 | 30 | 28 | 23 | 18 |
| Aromatic vinyl-based copolymer resin (C) | | | 33 | 28 | 23 | 15 | 0 | 0 | 0 |
| Filler | GF | | | | | | | | |
| Other thermoplastic resin | PA6 | | | | | | | | |
| Biobased product content of thermoplastic resin composition | | | 22 | 27 | 32 | 40 | 57 | 62 | 67 |
| Flowability (MVR) (cm$^3$/10 min) | | | 48 | 45 | 43 | 40 | 35 | 33 | 30 |
| MVR after moist heat aging (60°C, 80% RH, 500 Hr) (cm$^3$/10 min) | | | 61 | 60 | 61 | 60 | 59 | 60 | 58 |
| Rate of change in MVR due to moist heat aging (%) | | | 127 | 133 | 142 | 150 | 169 | 182 | 193 |
| 23°C charpy impact strength (kJ/m$^2$) | | | 10 | 12 | 15 | 20 | 25 | 27 | 30 |
| 23°C Charpy impact strength (kJ/m$^2$) after moisture absorption (23°C, 50% RH, 168 Hr) | | | 10 | 12 | 15 | 21 | 28 | 30 | 34 |
| Rate of change in 23°C Charpy impact strength due to moisture absorption (%) | | | 100 | 100 | 100 | 105 | 112 | 111 | 113 |

(continued)

|  | Example | | | | | | |
|---|---|---|---|---|---|---|---|
|  | 1 | 2 | 3 | 4 | 5 | 6 | 7 |
| -30°C Charpy impact strength (kJ/m$^2$) | 1 | 3 | 5 | 7 | 10 | 12 | 15 |
| -30°C Charpy impact strength (kJ/m$^2$) after moisture absorption (23°C, 50% RH, 168Hr) | 1 | 3 | 5 | 7 | 10 | 11 | 13 |
| Rate of change in -30°C Charpy impact strength due to moisture absorption (%) | 100 | 100 | 100 | 100 | 100 | 92 | 87 |
| Chemical resistance (limit strain) (%) | 0.3 | 0.5 | 0.7 | 0.7 | 0.7 | 0.8 | 0.8 |
| Abnormal noise risk index (5N, 1mm/s) after thermal deterioration (aging 80°C, 300Hr) | 1 | 1 | 1 | 1 | 1 | 1 | 1 |
| Abnormal noise risk index (5N, 1mm/s) after moisture absorption (aging 80°C, 300Hr, after leaving 23°C, 50% RH, 168Hr) | 1 | 1 | 1 | 1 | 1 | 2 | 2 |
| Heat resistance (HDT) (°C) (1.8MPa) | 84 | 84 | 83 | 83 | 79 | 70 | 67 |

[Table 2]

<Table2>

|  |  |  | Example | | | | | | |
|---|---|---|---|---|---|---|---|---|---|
|  |  |  | 8 | 9 | 10 | 11 | 12 | 13 | 14 |
| Biomass polyamide (A) | PA11 | | | | 30 | 40 | 40 | 40 | 40 |
|  | PA1010 | | 40 | | | | | | |
|  | PA610 | | | 40 | | | | | |
| Rubber-reinforced aromatic vinyl-based resin (Component (B) + Component (C), (D)) | Rubber-reinforced aromatic vinyl-based resin (B2) | | 15 | 15 | 15 | 6 | 9 | 11 | 30 |
|  | Details | Component (B) | 13 | 13 | 13 | 5 | 8 | 9 | 25 |
|  |  | Component (C) | 2 | 2 | 2 | 1 | 1 | 2 | 5 |
|  |  | Component (D) | | | | | | | |
| Acid-modified vinyl-based resin (D) | | | 30 | 30 | 30 | 30 | 30 | 30 | 30 |
| Aromatic vinyl-based copolymer resin (C) | | | 15 | 15 | 25 | 24 | 21 | 19 | 0 |
| Filler | GF | | | | | | | | |
| Other thermoplastic resin | PA6 | | | | 10 | | | | |
| Biobased product content of thermoplastic resin composition | | | 40 | 25 | 30 | 40 | 40 | 40 | 40 |
| Flowability (MVR) (cm$^3$/10 min) | | | 30 | 35 | 40 | 44 | 43 | 41 | 50 |
| MVR after moist heat aging (60°C, 80% RH, 500 Hr) (cm$^3$/10 min) | | | 58 | 68 | 78 | 55 | 56 | 60 | 70 |
| Rate of change in MVR due to moist heat aging (%) | | | 193 | 194 | 195 | 125 | 130 | 146 | 140 |
| 23°C charpy impact strength (kJ/m$^2$) | | | 15 | 10 | 12 | 10 | 13 | 15 | 40 |
| 23°C Charpy impact strength (kJ/m$^2$) after moisture absorption (23°C, 50% RH, 168 Hr) | | | 17 | 12 | 14 | 10 | 13 | 16 | 43 |

(continued)

| | Example | | | | | | |
|---|---|---|---|---|---|---|---|
| | 8 | 9 | 10 | 11 | 12 | 13 | 14 |
| Rate of change in 23°C Charpy impact strength due to moisture absorption (%) | 113 | 120 | 117 | 100 | 100 | 107 | 108 |
| -30°C Charpy impact strength (kJ/m$^2$) | 3 | 2 | 4 | 3 | 4 | 5 | 20 |
| -30°C Charpy impact strength (kJ/m$^2$) after moisture absorption (23°C, 50% RH, 168Hr) | 3 | 2 | 3 | 3 | 4 | 5 | 18 |
| Rate of change in -30°C Charpy impact strength due to moisture absorption (%) | 100 | 100 | 75 | 100 | 100 | 100 | 90 |
| Chemical resistance (limit strain) (%) | 0.5 | 0.5 | 0.6 | 0.5 | 0.5 | 0.6 | 0.7 |
| Abnormal noise risk index (5N, 1mm/s) after thermal deterioration (aging 80°C, 300Hr) | 1 | 1 | 1 | 4 | 2 | 1 | 1 |
| Abnormal noise risk index (5N, 1mm/s) after moisture absorption (aging 80°C, 300Hr, after leaving 23°C, 50% RH, 168Hr) | 3 | 5 | 2 | 5 | 2 | 1 | 1 |
| Heat resistance (HDT) (°C) (1.8MPa) | 87 | 89 | 85 | 84 | 84 | 83 | 75 |

[Table 3]

<Table3>

| | | Example | | | | | | | | | |
|---|---|---|---|---|---|---|---|---|---|---|---|
| | | 15 | 16 | 17 | 18 | 19 | 20 | 21 | 22 | 23 | 24 |
| Biomass polyamide (A) | PA11 | 40 | 40 | 40 | 40 | 40 | 40 | 40 | 40 | 40 | 40 |
| | PA1010 | | | | | | | | | | |
| | PA610 | | | | | | | | | | |
| Rubber-reinforced aromatic vinyl-based resin (Component (B) + Component (C), (D)) | Rubber-reinforced aromatic vinyl-based resin (B1) | | | | 25 | | | | | | |
| | Rubber-reinforced aromatic vinyl-based resin (B2) | 38 | 43 | | | | 15 | 29 | 27 | 20 | 5 |
| | Rubber-reinforced aromatic vinyl-based resin (B3) | | | | 20 | | | 1 | 3 | 10 | 25 |
| | Rubber-reinforced aromatic vinyl-based resin (B4) | | | | | 25 | | | | | |
| | Details — Component (B) | 32 | 36 | 12 | 13 | 13 | 13 | 25 | 25 | 24 | 21 |
| | Details — Component (C) | 6 | 7 | 13 | 7 | | 2 | 5 | 5 | 6 | 9 |
| | Details — Component (D) | | | | | 12 | | | | | |
| Acid-modified vinyl-based resin (D) | | 22 | 17 | 30 | 30 | 18 | 4 | 30 | 30 | 30 | 30 |

(continued)

| | | Example | | | | | | | | | |
| | | 15 | 16 | 17 | 18 | 19 | 20 | 21 | 22 | 23 | 24 |
| Aromatic vinyl-based copolymer resin (C) | | 0 | 0 | 5 | 10 | 17 | 41 | | | | |
| Filler | GF | | | | | | | | | | |
| Other thermoplastic resin | PA6 | | | | | | | | | | |
| Biobased product content of thermoplastic resin composition | | 40 | 40 | 40 | 40 | 40 | 40 | 40 | 40 | 40 | 40 |
| Flowability (MVR) (cm$^3$/10 min) | | 53 | 55 | 40 | 30 | 30 | 61 | 50 | 48 | 42 | 32 |
| MVR after moist heat aging (60°C, 80% RH, 500 Hr) (cm$^3$/10 min) | | 80 | 88 | 55 | 50 | 57 | 110 | 72 | 70 | 70 | 60 |
| Rate of change in MVR due to moist heat aging (%) | | 151 | 160 | 138 | 167 | 190 | 180 | 144 | 146 | 167 | 188 |
| 23°C charpy impact strength (kJ/m$^2$) | | 45 | 48 | 20 | 45 | 40 | 15 | 42 | 45 | 50 | 60 |
| 23°C Charpy impact strength (kJ/m$^2$) after moisture absorption (23°C, *50%* RH, 168 Hr) | | 49 | 53 | 21 | 47 | 42 | 18 | 45 | 48 | 53 | 63 |
| Rate of change in 23°C Charpy impact strength due to moisture absorption (%) | | 109 | 110 | 105 | 104 | 105 | 120 | 107 | 107 | 106 | 105 |
| -30°C Charpy impact strength (kJ/m$^2$) | | 23 | 25 | 7 | 25 | 20 | 6 | 22 | 25 | 28 | 35 |
| -30°C Charpy impact strength (kJ/m$^2$) after moisture absorption (23°C, 50% RH, 168Hr) | | 21 | 23 | 7 | 24 | 19 | 5 | 20 | 22 | 25 | 32 |
| Rate of change in -30°C Charpy impact strength due to moisture absorption (%) | | 91 | 92 | 100 | 96 | 95 | 83 | 91 | 88 | 89 | 91 |
| Chemical resistance (limit strain) (%) | | 0.5 | 0.3 | 0.7 | 0.7 | 0.7 | 0.7 | 0.7 | 0.7 | 0.7 | 0.7 |
| Abnormal noise risk index (5N, 1mm/s) after thermal deterioration (aging 80°C, 300Hr) | | 1 | 1 | 1 | 2 | 3 | 1 | 1 | 1 | 1 | 3 |
| Abnormal noise risk index (5N, 1mm/s) after moisture absorption (aging 80°C, 300Hr, after leaving 23°C, 50% RH, 168Hr) | | 2 | 2 | 1 | 7 | 8 | 2 | 1 | 1 | 1 | 5 |
| Heat resistance (HDT) (°C) (1.8MPa) | | 71 | 68 | 82 | 82 | 81 | 81 | 75 | 75 | 75 | 75 |

[Table 4]

<Table4>

| | | Example | | | | | |
| | | 25 | 26 | 27 | 28 | 29 | 30 |
| Biomass polyamide (A) | PA11 | 40 | 35 | 40 | 40 | 40 | 40 |
| | PA1010 | | | | | | |
| | PA610 | | | | | | |

(continued)

| | | | Example | | | | | |
|---|---|---|---|---|---|---|---|---|
| | | | 25 | 26 | 27 | 28 | 29 | 30 |
| Rubber-reinforced aromatic vinyl-based resin (Component (B) + Component (C), (D)) * | Rubber-reinforced aromatic vinyl-based resin (B1) (0.35 μm) | | | | | | | |
| | Rubber-reinforced aromatic vinyl-based resin (B2) (0.40 μm) | | 15 | 15 | 13 | 8 | 5 | |
| | Rubber-reinforced aromatic vinyl-based resin (B3) (0.40 μm) | | | | | | | |
| | Rubber-reinforced aromatic vinyl-based resin (B4) (0.40 μm) | | | | | | | |
| | Rubber-reinforced aromatic vinyl-based resin (B5) (0.10 μm) | | | | 2 | 7 | 10 | 15 |
| | Details | Component (B) | 13 | 13 | 13 | 13 | 13 | 13 |
| | | Component (C) | 2 | 2 | 2 | 2 | 2 | 2 |
| | | Component (D) | | | | | | |
| Acid-modified vinyl-based resin (D) | | | 1 | 30 | 30 | 30 | 30 | 30 |
| Aromatic vinyl-based copolymer resin (C) | | | 44 | 5 | 15 | 15 | 15 | 15 |
| Filler | GF | | | 15 | | | | |
| Other thermoplastic resin | PA6 | | | | | | | |
| Biobased product content of thermoplastic resin composition | | | 40 | 35 | 40 | 40 | 40 | 40 |
| Flowability (MVR) (cm³/10 min) | | | 68 | 30 | 38 | 36 | 34 | 32 |
| MVR after moist heat aging (60°C, 80% RH, 500 Hr) (cm³/10 min) | | | 140 | 32 | 59 | 59 | 60 | 60 |
| Rate of change in MVR due to moist heat aging (%) | | | 206 | 107 | 155 | 164 | 176 | 188 |
| 23°C charpy impact strength (kJ/m²) | | | 12 | 10 | 14 | 10 | 9 | 8 |
| 23°C Charpy impact strength (kJ/m²) after moisture absorption (23°C, 50% RH, 168 Hr) | | | 15 | 10 | 14 | 10 | 9 | 8 |
| Rate of change in 23°C Charpy impact strength due to moisture absorption (%) | | | 125 | 100 | 100 | 100 | 100 | 100 |
| -30°C Charpy impact strength (kJ/m²) | | | 5 | 3 | 5 | 3 | 2 | 1 |
| -30°C Charpy impact strength (kJ/m²) after moisture absorption (23°C, 50% RH, 168Hr) | | | 3 | 3 | 5 | 3 | 2 | 1 |
| Rate of change in -30°C Charpy impact strength due to moisture absorption (%) | | | 60 | 100 | 100 | 100 | 100 | 100 |
| Chemical resistance (limit strain) (%) | | | 0.7 | 0.3 | 0.7 | 0.7 | 0.6 | 0.5 |
| Abnormal noise risk index (5N, 1mm/s) after thermal deterioration (aging 80°C, 300Hr) | | | 3 | 1 | 2 | 2 | 3 | 3 |
| Abnormal noise risk index (5N, 1mm/s) after moisture absorption (aging 80°C, 300Hr, after leaving 23°C, 50% RH, 168Hr) | | | 5 | 1 | 4 | 5 | 6 | 8 |

(continued)

| | Example | | | | | |
|---|---|---|---|---|---|---|
| | 25 | 26 | 27 | 28 | 29 | 30 |
| Heat resistance (HDT) (°C) (1.8MPa) | 80 | 125 | 83 | 83 | 83 | 83 |

*The numbers in parentheses in the columns for rubber-reinforced aromatic vinyl-based resins (B1) to (B5) are the weight average particle diameters of rubbery polymer (b).

[Table 5]

<Table5>

| | | | Comparative Example | | | | | | | | |
|---|---|---|---|---|---|---|---|---|---|---|---|
| | | | 1 | 2 | 3 | 4 | 5 | 6 | 7 | 8 | 9 |
| Biomass polyamide (A) | PA11 | | | | 19 | 71 | 40 | 40 | 40 | 40 | |
| | PA1010 | | | | | | | | | | |
| | PA610 | | | | | | | | | | |
| Rubber-reinforced aromatic vinyl-based resin (Component (B) + Component (C), (D)) | Rubber-reinforced aromatic vinyl-based resin (B2) | | 15 | | 15 | 15 | 4 | 46 | 15 | 15 | 15 |
| | Rubber-reinforced aromatic vinyl-based resin (B3) | | | 20 | | | | | | | |
| | Details | Component (B) | 13 | 13 | 13 | 13 | 3 | 39 | 13 | 13 | 13 |
| | | Component (C) | 2 | 7 | 2 | 2 | 1 | 7 | 2 | 2 | 2 |
| | | Component (D) | | | | | | | | | |
| Acid-modified vinyl-based resin (D) | | | 30 | 30 | 30 | 14 | 30 | 14 | 0 | 45 | 30 |
| Aromatic vinyl-based copolymer resin (C) | | | 15 | 10 | 36 | 0 | 26 | 0 | 45 | 0 | 5 |
| Filler | GF | | | | | | | | | | 15 |
| Other thermoplastic resin | PA6 | | 40 | 40 | | | | | | | 35 |
| Biobased product content of thermoplastic resin composition | | | 0 | 0 | 19 | 71 | 40 | 40 | 40 | 40 | 0 |
| Flowability (MVR) (cm$^3$/10 min) | | | 40 | 40 | 50 | 28 | 44 | 55 | 69 | 8 | 30 |
| MVR after moist heat aging (60°C, 80% RH, 500 Hr) (cm$^3$/10 min) | | | 110 | 120 | 60 | 60 | 65 | 90 | 147 | 10 | 50 |
| Rate of change in MVR due to moist heat aging (%) | | | 275 | 300 | 120 | 214 | 148 | 164 | 213 | 125 | 167 |
| 23°C charpy impact strength (kJ/m$^2$) | | | 10 | 20 | 5 | 30 | 6 | 48 | 9 | 10 | 5 |
| 23°C Charpy impact strength (kJ/m$^2$) after moisture absorption (23°C, 50% RH, 168 Hr) | | | 18 | 35 | 5 | 34 | 6 | 53 | 12 | 12 | 6 |
| Rate of change in 23°C Charpy impact strength due to moisture absorption (%) | | | 180 | 175 | 100 | 113 | 100 | 110 | 133 | 120 | 120 |

(continued)

| | Comparative Example | | | | | | | | |
|---|---|---|---|---|---|---|---|---|---|
| | 1 | 2 | 3 | 4 | 5 | 6 | 7 | 8 | 9 |
| -30°C Charpy impact strength (kJ/m$^2$) | 2 | 5 | 1 | 15 | 1 | 25 | 5 | 6 | 1 |
| -30°C Charpy impact strength (kJ/m$^2$) after moisture absorption (23°C, 50% RH, 168Hr) | 1 | 2 | 1 | 12 | 1 | 22 | 2 | 2 | 1 |
| Rate of change in -30°C Charpy impact strength due to moisture absorption (%) | 50 | 40 | 100 | 80 | 100 | 88 | 40 | 33 | 100 |
| Chemical resistance (limit strain) (%) | 0.6 | 0.6 | <0.2 | 0.8 | 0.5 | <0.2 | 0.7 | 0.6 | 0.3 |
| Abnormal noise risk index (5N, 1mm/s) after thermal deterioration (aging 80°C, 300Hr) | 3 | 7 | 1 | 1 | 8 | 1 | 5 | 1 | 3 |
| Abnormal noise risk index (5N, 1mm/s) after moisture absorption (aging 80°C, 300Hr, after leaving 23°C, 50% RH, 168Hr) | 8 | 10 | 1 | 5 | 10 | 2 | 8 | 2 | 6 |
| Heat resistance (HDT) (°C) (1.8MPa) | 70 | 68 | 84 | 65 | 85 | 65 | 83 | 83 | 118 |

The following can be seen from Tables 1 to 5.

Since Examples 1 to 30 were within the range of the requirements of the present invention, they had good moldability and excellent impact resistance, chemical resistance, long-term durability, and creaking noise suppression.

On the other hand, Comparative Examples 1 and 2, in which the polyamide (A) was not blended, were inferior in long-term durability and creaking noise suppression.

Comparative Examples 3 and 4, in which the blending amount of the polyamide (A) was outside the range of the present invention, were inferior in any one of impact resistance, chemical resistance and long-term durability.

Comparative Examples 5 and 6, in which the blending amount of the rubber-reinforced vinyl-based resin (B) was outside the range of the present invention, were inferior in any one of impact resistance, chemical resistance and creaking noise suppression.

Comparative Examples 7 and 8, in which the blending amount of the acid-modified vinyl-based resin (D) was outside the range of the present invention, were inferior in any one of moldability, impact resistance, and creaking noise suppression.

Comparing Example 26 with Comparative Example 9, it can be seen that even when a filler such as glass fiber is added, by blending the polyamide (A), it is possible to obtain excellent impact resistance and long-term durability.

Examples 27 to 30 were examples in which the rubber-reinforced aromatic vinyl-based resin (B5) containing a rubbery polymer (b) having a small particle diameter of 0.10 $\mu$m in weight average particle diameter was used as the rubber-reinforced vinyl-based graft resin (B). The Charpy impact strength and abnormal noise risk index were inferior to other Examples in which the rubber-reinforced aromatic vinyl-based resin (B5) containing such a small particle diameter rubbery polymer (b) was not used. This tendency was also evident in Example 27, in which a very small amount of rubber-reinforced aromatic vinyl-based resin (B5) was used.

Although the present invention has been described in detail by way of the specific modes, it is apparent for those skilled in the art that various changes can be made without departing from the spirit and scope of the present invention.

The present application is based on Japanese Patent Application No. 2022-165619 filed on October 14, 2022, the entire contents of which are incorporated herein by reference.

Industrial Applicability

The thermoplastic resin composition of the present invention has excellent moldability and can be suitably used as a molding material for a molded article that require impact resistance, chemical resistance, long-term durability, and suppression of creaking noise.

Reference Signs List

10, 18, 20, 28    PART

| | |
|---|---|
| 19 | SHAFT |
| 29 | OPENING |
| 30 | PROTRUSION |
| 31 | ADHESIVE |
| 33 | BOLT AND NUT |

**Claims**

1. A thermoplastic resin composition comprising: a polyamide (A), at least a part of raw materials of which is derived from biomass;

   a rubber-reinforced vinyl-based graft resin (B);
   an aromatic vinyl-based copolymer resin (C); and
   an acid-modified vinyl-based resin (D),
   wherein the thermoplastic resin composition contains 20 to 70 parts by mass of the polyamide (A), 5 to 45 parts by mass of the rubber-reinforced vinyl-based graft resin (B), 10 to 75 parts by mass of a total of the aromatic vinyl-based copolymer resin (C) and the acid-modified vinyl-based resin (D), and 0.1 to 40 parts by mass of the acid-modified vinyl-based resin (D) in a total of 100 parts by mass of the polyamide (A), the rubber-reinforced vinyl-based graft resin (B), the aromatic vinyl-based copolymer resin (C), and the acid-modified vinyl-based resin (D).

2. The thermoplastic resin composition according to claim 1, wherein the rubber-reinforced vinyl-based graft resin (B) comprises a rubbery polymer (b) portion and a resin (m) portion containing structural units derived from a vinyl-based monomer grafted to the rubbery polymer (b), and the weight average particle diameter of the rubbery polymer (b) is 0.20 to 0.70 $\mu$m.

3. The thermoplastic resin composition according to claim 2, wherein the rubber-reinforced vinyl-based graft resin (B) contains, as the rubbery polymer (b), an ethylene-$\alpha$-olefin-based rubbery polymer (b1) portion having a melting point of 0 to 100°C measured in accordance with JIS K7121-1987.

4. The thermoplastic resin composition according to claim 3, wherein the rubber-reinforced vinyl-based graft resin (B) is obtained by polymerizing a vinyl-based monomer containing an aromatic vinyl compound in the presence of an ethylene-$\alpha$-olefin rubber polymer (b1) having a melting point of 0 to 100°C measured in accordance with JIS K7121-1987.

5. A molded article made of the thermoplastic resin composition according to any one of claims 1 to 4.

[Fig.1]

**Fig. 1**

[Fig.2]

Fig.2 a

Fig.2 b

Fig.2 c

Fig.2 d

[Fig.3]

Fig.3

10

20

[Fig.4]

Fig.4

20

10

[Fig.5]

Fig.5

20

10

[Fig.6]

Fig.6

10

20

20

10

[Fig.7]

Fig.7

10

20

[Fig.8]

Fig.8

20

10

20

[Fig.9]

## Fig.9 A

## Fig.9 B

## Fig.9 C

[Fig.10]

Fig.10

[Fig.11]

Fig.11A

Fig.11B

Fig.11C

[Fig.12]

## Fig.12A

## Fig.12B

## Fig.12C

[Fig.13]

Fig.13

[Fig.14]

Fig.14A

B

C          C

18

B

29

29

29

28

Fig.14B

29

29

29

18

28

Fig.14C

29

28

19

18

(C)

## INTERNATIONAL SEARCH REPORT

| International application No. |
|---|
| **PCT/JP2023/033324** |

| A. | CLASSIFICATION OF SUBJECT MATTER |
|---|---|

*C08L 77/00*(2006.01)i; *C08L 25/08*(2006.01)i; *C08L 51/04*(2006.01)i; *C08L 101/08*(2006.01)i
FI:   C08L77/00; C08L25/08; C08L51/04; C08L101/08

According to International Patent Classification (IPC) or to both national classification and IPC

| B. | FIELDS SEARCHED |
|---|---|

Minimum documentation searched (classification system followed by classification symbols)

C08L77/00; C08L25/08; C08L51/04; C08L101/08

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2008-214585 A (NIPPON A & L KK) 18 September 2008 (2008-09-18) claims, examples, paragraphs [0006]-[0007], [0011] | 1-5 |
| X | JP 2008-297334 A (NIPPON A & L KK) 11 December 2008 (2008-12-11) claims, examples, paragraphs [0006]-[0007], [0009], [0011] | 1-5 |
| X | JP 2019-172759 A (TECHNO UMG CO LTD) 10 October 2019 (2019-10-10) claims, examples | 1-5 |
| X | JP 2018-168350 A (TORAY INDUSTRIES) 01 November 2018 (2018-11-01) claims, examples | 1-2, 5 |
| A | | 3-4 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **22 November 2023** | **05 December 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/033324**

| Patent document cited in search report | | | Publication date (day/month/year) | Patent family member(s) | Publication date (day/month/year) |
|---|---|---|---|---|---|
| JP | 2008-214585 | A | 18 September 2008 | (Family: none) | |
| JP | 2008-297334 | A | 11 December 2008 | (Family: none) | |
| JP | 2019-172759 | A | 10 October 2019 | (Family: none) | |
| JP | 2018-168350 | A | 01 November 2018 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H784549 B
- JP 2002212383 A
- WO 2014175332 A
- JP 2011168186 A
- JP 2019172759 A
- JP 2016125006 A
- JP 2022165619 A